(19) **Europäisches Patentamt / European Patent Office / Office européen des brevets**

(11) **EP 4 196 378 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **21766567.8**

(22) Anmeldetag: **10.08.2021**

(51) Internationale Patentklassifikation (IPC):
**B60T 8/1755** (2006.01)

(52) Gemeinsame Patentklassifikation (CPC):
**B60W 10/04; B60T 8/1755; B60W 10/184; B60W 30/02; B60W 50/0097;** B60T 2270/86; B60W 2050/0031; B60W 2050/0036; B60W 2050/0037; B60W 2520/26; B60W 2540/10; B60W 2540/18; B60W 2720/20; B60W 2720/26; B60W 2720/28; (Forts.)

(86) Internationale Anmeldenummer:
**PCT/DE2021/200105**

(87) Internationale Veröffentlichungsnummer:
**WO 2022/033644 (17.02.2022 Gazette 2022/07)**

(54) **BEWEGUNGSSTEUERUNG IN KRAFTFAHRZEUGEN**

MOTION CONTROL IN MOTOR VEHICLES

COMMANDE DE MOUVEMENT DANS DES VÉHICULES À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2020 DE 102020210332**
**09.03.2021 DE 102021202273**

(43) Veröffentlichungstag der Anmeldung:
**21.06.2023 Patentblatt 2023/25**

(73) Patentinhaber: **Continental Automotive Technologies GmbH**
**30175 Hannover (DE)**

(72) Erfinder:
• **RASTE, Thomas**
**60488 Frankfurt am Main (DE)**
• **LAUER, Peter**
**60488 Frankfurt am Main (DE)**
• **SCHRÖDER, Timo**
**60488 Frankfurt am Main (DE)**

(74) Vertreter: **Aumovio Corporation Continental Automotive Technologies GmbH Putzbrunner Straße 69 81739 München (DE)**

(56) Entgegenhaltungen:
**DE-A1- 102018 122 948    US-B1- 10 407 035**

• **BERNTORP KARL ET AL: "Hierarchical predictive control for ground-vehicle maneuvering", 2015 AMERICAN CONTROL CONFERENCE (ACC), AMERICAN AUTOMATIC CONTROL COUNCIL, 1 July 2015 (2015-07-01), pages 2771 - 2776, XP033185262, DOI: 10.1109/ACC.2015.7171154**

(52) Gemeinsame Patentklassifikation (CPC): (Forts.)
B60W 2720/30; B60W 2720/40

(52) Gemeinsame Patentklassifikation (CPC): (Forts.)
B60W 2720/30; B60W 2720/40

**Beschreibung**

Die Erfindung betrifft ein Verfahren zur Steuerung von auf Fahrzeugräder eines Kraftfahrzeugs wirkenden Aktuatoren.

Die Bewegungssteuerung für autonomes und manuelles Fahren soll den zukünftig erhöhten Anforderungen an Energieeffizienz, Sicherheit und Fahrdynamik gerecht werden. Die Software soll dabei auf einer zentralisierten Rechenplattform alle verfügbaren aktiven und semiaktiven Aktuatoren - Lenkung, Bremse, Antrieb und Dämpfer - integrieren und ansteuern, um damit für ein harmonisches Fahrerlebnis zu sorgen. Hierzu müssen vor allem die horizontale Längs- und Querdynamik eines Fahrzeugs möglichst gut koordiniert sein.

Die horizontale Fahrzeugbewegung wird durch die Radlenkwinkel und Radmomente zu jedem Zeitpunkt bestimmt, die auch die horizontalen Reifenkräfte bestimmen. Ein weiterer wichtiger Aspekt ist die Zuordnung der Bewegungsbefehle zu den einzelnen Aktoren. Bei so genannten überaktuierten Systemen übersteigt die Anzahl der Steuergrößen die Anzahl der Freiheitsgrade der Fahrzeugbewegung.

Aus der US 10407035 B1 ist ein Kontrollsystem für Fahrzeuge bekannt. Eine Fahrzeugrecheneinheit bestimmt einen Bewegungsplan, der an eine Fahrzeugbewegungssteuerung weitergereicht wird. Diese bestimmt daraus mit Informationen über technisch mögliche Chassis-Level Beschleunigungen eine Chassis-Level Bewegungsanforderung. Eine Chassiskontrolleinheit bestimmt wiederum aus dieser Bewegungsanforderung Aktuatorbefehle für die Aktuatoren, welche die eigentliche Beeinflussung der Chassis-Level Beschleunigungen vornehmen können.

Aus der DE 10 2018 122 948 A1 ist ein Verfahren zum Steuern eines Kraftfahrzeugs bekannt, bei dem eine Solllängskraft, eine Sollquerkraft und ein Sollgiermoment vorgegeben werden. Mittels eines Regelungsalgorithmus werden daraus jeweils ein Sollwert für das Antriebsmoment und jeweils ein Sollwert für das Lenkmoment für jedes der vier Räder bestimmt. Dieses Optimierungsproblem wird im Sinne der modellprädiktiven Regelung mit gleitendem Horizont gelöst.

Beispielsweise beschreibt die DE 10 2009 049 635 A1 eine Bewegungssteuerung von Fahrzeugen mit mehr Aktoren als Freiheitsgraden, mit einer statischen, direkten Allokation von Stellgrößen für die Aktoren. Der Fahrdynamikregler ist hier von der Aktorallokation separiert, was ggfs. zu nicht umsetzbaren Reglerausgangsgrößen führen kann. Weit verbreitet sind einfache, regelbasierte Allokationen, wie z.B. die Raddruckverteilungen in heutigen ESC Regelsystemen. Diese Ansätze finden in der Regel kein globales Optimum und schöpfen damit nicht das volle Potential der Aktoren aus.

Es ist daher Aufgabe der Erfindung eine verbesserte Bewegungssteuerung anzugeben.

Die Aufgabe wird gelöst durch ein Verfahren zur Steuerung von auf Fahrzeugräder eines Kraftfahrzeugs wirkenden Aktuatoren gemäß Anspruch 1, wobei das Verfahren die folgenden Schritte aufweist:

Ermitteln einer auf einen Referenzpunkt des Kraftfahrzeugs zu bewirkenden Kraft auf Grundlage von Fahrervorgaben,

Ermitteln von auf die Fahrzeugräder zu bewirkenden Radkräften zur Umsetzung der auf den Referenzpunkt des Kraftfahrzeugs zu bewirkenden Kraft mittels einer ersten dynamischen Allokation durch eine modellbasierte prädiktive Regelung, Ermitteln von Sollwerten für Radparameter aus den ermittelten Radkräften, und Ansteuern der Aktoren des Kraftfahrzeugs zur Umsetzung der Sollwerte der Radparameter.

Das Konzept der Bewegungssteuerung basiert auf dem Prinzip der inversen Dynamik. Das bedeutet, dass von der gewünschten kinematischen Bewegung unter Berücksichtigung der Trägheitseigenschaften des Fahrzeugs zurückgearbeitet wird, um die entsprechenden Regelgrößen, nämlich insbesondere die dynamischen Reifenkräfte und die entsprechenden Radmomente und Radlenkwinkel, zu ermitteln. Um Störgrößen zu kompensieren, werden bevorzugt Maßnahmen wie geeignete Regelungen und Störungskompensation eingesetzt. Bei der Ermittlung der Regelgrößen wird vorzugsweise das Regelsystem in mehrere kaskadierende Ebenen aufgeteilt, die durch klar definierte Schnittstellen verbunden sind.

Um einen koordinierten Aktuatorbetrieb zu ermöglichen, können optimierungsbasierte Allokationsalgorithmen verwendet werden.

Mögliche Fahrzeugbewegungen werden durch eine Reihe von Faktoren beeinflusst: die Leistungsgrenzen der Aktoren und Sensoren, die Straßenbedingungen, Fahrgastkomfort und -sicherheit, Energie und Emissionen, die Präferenzen des Fahrers und Infrastrukturfaktoren. Diese Faktoren werden bevorzugt bei der Auslegung des Regelsystems bereits auf der obersten Kaskadenebene systematisch berücksichtigt werden. Erfindungsgemäß werden auch kontinuierliche Prognosefähigkeiten einbezogen werden. Dies wird durch die fortschrittliche Regelungsmethode der modellbasierten prädiktiven Regelung gewährleistet, die in der Lage ist, den Fahrzeugbetrieb zu optimieren und die Markteinführungszeit für immer komplexere Fahrzeugsysteme zu verkürzen.

Der erfindungsgemäße prädiktive, optimale Ansatz regelt die Fahr- und Raddynamik und erlaubt auf einfache Weise Zwangsbedingungen in die Optimierung mit einzubeziehen. Dies sind vor allem die Reibwert-bedingten Begrenzungen der Radkräfte und der Fahrdynamik als auch die Limitierungen der Aktuatoren. Damit ist die Koordinierung der Längs- und Querdynamik in den physikalisch verfügbaren Grenzen sichergestellt. Daneben können durch Gütefunktionen Priorisierungen hinsichtlich fahrdynamischer und energiebezogener Größen vorgenommen werden.

In einer bevorzugten Ausführungsform der Erfindung werden die Fahrervorgaben von einem virtuellen Fahrer und/oder einem Assistenzsystem zur Verfügung gestellt. Dies alternativ oder zusätzlich zu einem menschlichen Fahrer erfolgen, der die Fahrervorgaben beispielsweise durch ein Gaspedal, ein Bremspedal und ein Lenkrad eingeben kann. Ein virtuelle Fahrer kann zusätzlich einen Hinterradlenkwinkel vorgeben, welcher zur Bewegungssteuerung genutzt wird.

In einer bevorzugten Ausführungsform der Erfindung handelt es sich bei den Fahrervorgaben um eine Beschleunigung und/oder wenigstens einen Lenkwinkel. Dies sind die Kernvorgaben, zur Steuerung eines Fahrzeugs.

In einer bevorzugten Ausführungsform der Erfindung handelt es sich bei den Sollwerten für die Radparameter um auf die Räder jeweils wirkende Drehmomente, Schlupfwerte der Räder, Drehgeschwindigkeiten der Räder und/oder Lenkwinkel der Räder.

In einer bevorzugten Ausführungsform der Erfindung weist das Verfahren zur Umsetzung eines Sollwerts für ein auf ein Fahrzeugrad wirkendes Drehmoment ferner eine zweite dynamische Allokation auf, die eine Schlupfregelung enthält. Damit kann auch das Drehmoment auf einem Rad in optimierter Weise auf die zur Verfügung stehenden Aktoren aufgeteilt werden.

In einer bevorzugten Ausführungsform der Erfindung handelt es sich bei den Aktoren um Elektromotoren und/oder Reibungsbremsen.

Erfindungsgemäß werden in einem Zwischenschritt kinematische Soll-Bewegungsgrößen über ein virtuell geregeltes Einspurmodell angepasst und bei der dynamischen Allokation der Radkräfte berücksichtigt.

In einer bevorzugten Ausführungsform der Erfindung enthält die dynamische Allokation der Radkräfte eine Fahrdynamikregelung. Durch die Kombination von Allokation und Fahrdynamikregelung, wird sichergestellt, dass die Fahrdynamikregelung die Möglichkeiten maximal und optimal ausnutzen kann ohne Vorgaben zu machen, welche durch die Aktoren nicht umgesetzt werden können.

In einer bevorzugten Ausführungsform der Erfindung werden mittels einer statischen Allokation vorläufige Radkräfte ermittelt und diese der dynamischen Allokation als Eingangswerte oder Startwerte zugeführt. Danach kann eine Arbitration aus den ermittelten Radkräften der statischen und der dynamischen Allokation durchgeführt werden.

In einer bevorzugten Ausführungsform der Erfindung beachtet die dynamische Allokation eine Sättigung eines zugeordneten Aktors, eine Rekonfiguration zur Sicherstellung der Fehlertoleranz bei Ausfall des Aktors, eine Erhöhung der Energieeffizienz und eine Minimierung des Verschleißes.

In einer bevorzugten Ausführungsform der Erfindung werden die ermittelten Radkräfte mit einem inversen Reifenkraftmodell in Sollgrößen für Drehmomente, Radschlüpfe, Drehgeschwindigkeiten und Lenkwinkel der Räder umgerechnet.

Weitere Merkmale, Vorteile und Anwendungsmöglichkeiten der Erfindung ergeben sich auch durch die nachfolgende Beschreibung von Ausführungsbeispielen anhand von Berechnungen und der Zeichnungen.

Fig. 1 zeigt eine Fahrzeugkonfiguration mit einer erfindungsgemäßen Bewegungssteuerung,

Fig.2 zeigt den Aufbau in parent - child - Systeme,

Fig. 3 zeigt schematisch das Bewegungssteuerungskonzept,

Fig. 4 zeigt die Kräfte des Kraftfahrzeugs,

Fig. 5 zeigt die Kräfte an einem Reifen,

Fig. 6 zeigt ein erstes Testmanöver,

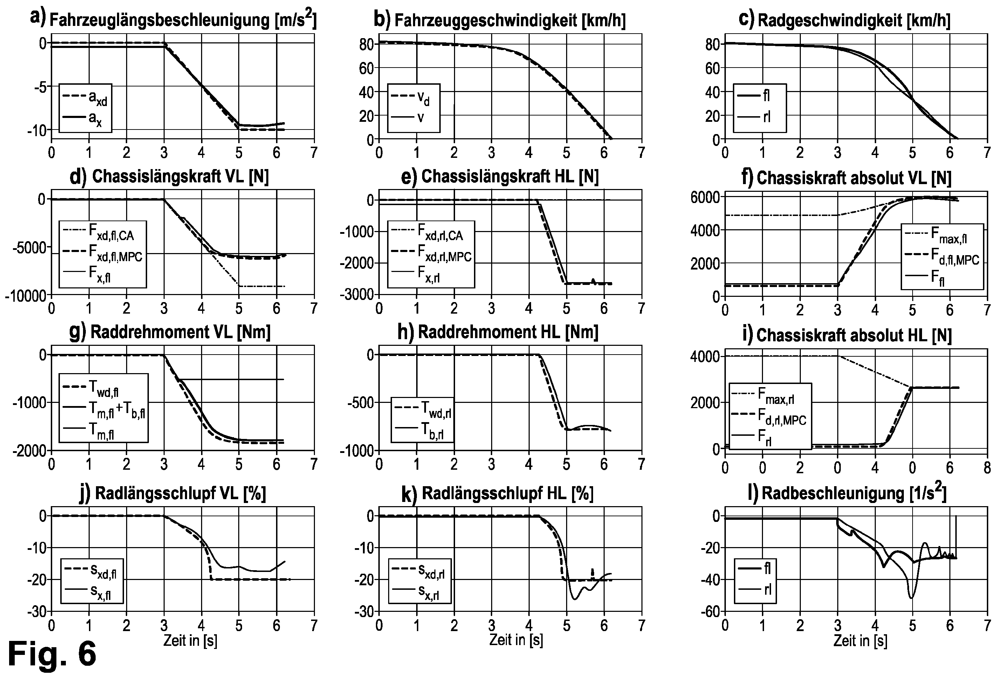

Fig. 6 zeigt ein zweites Testmanöver,

Fig. 6 zeigt ein drittes Testmanöver,

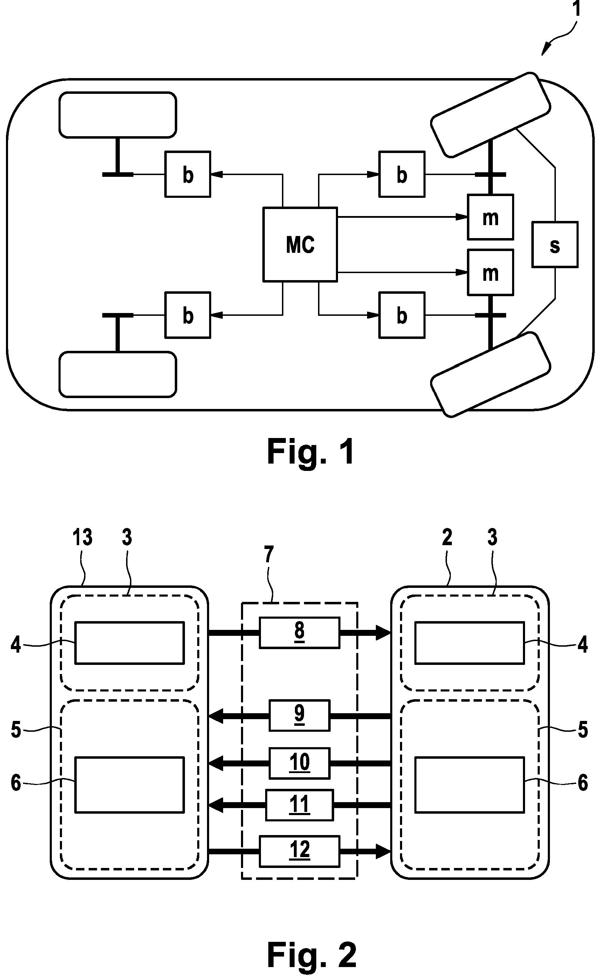

Figur 1 zeigt eine Fahrzeugkonfiguration zur Bewegungssteuerung (MC) des Fahrzeugs. Die Bewegungssteuerung (MC) hat Zugriff auf alle Bremsen (b), welche insbesondere elektromechanisch ausgebildet sein können, und beide Elektromotoren (m) an der Vorderachse, welche zur regenerativen Bremsung geeignet sind. Mit dieser Konfiguration ist ein verbessertes Torque Vectoring und Blending realisierbar, das die Energieeffizienz, die Stabilität und das Handling des Fahrzeugs verbessert. Die Lenkung (s) ist nicht durch die Bewegungssteuerung (MC) kontrollierbar.

Das regenerative Bremsen verbessert den Komfort des Fahrers und der Passagiere während der Fahrt und erweitert die Reichweite des Fahrzeugs.

Das Bewegungssteuerungskonzept verwendet Elemente, die vom objektorientierten Design inspiriert sind. Die Elemente, die dabei zum Einsatz kommen, haben einen Aufbau, der das Gesamtsystem jeweils in Elternsysteme 13 und Kindsysteme 2 (Parent/Child-System-Paare) entlang verschiedener Wirkungsketten abbildet, wie in Figur 2 dargestellt ist. Die Wirkungsketten sind entweder für bestimmte Zwecke aufgebaut oder stellen äußere Einflüsse wie Abwärme dar. Beispiele für Parent/Child-System-Paare sind Fahrzeug/Chassis, Chassis/Corner oder Corner/Aktuator. Jedes System unterscheidet intern zwischen Informationslieferanten/Observer 3 (Beobachterfunktionen) und Managern 4. Beobachterfunktionen 3 liefern geschätzte oder gemessene Istwerte 9 für die eigene und die Parent-Ebene 13 und koordinieren die Randbedingungen 10, die sie von der Child-Ebene 2 erhalten. Sie können außerdem geschätzte oder gemessene Störungen ("Zähler") 12 bereitstellen, die von eigenen oder untergeordneten Systemen zur Verbesserung der Steuerungsqualität verwendet werden. Managerfunktionen ermitteln Anforderungen 8 zur Steuerung des jeweiligen Child-Systems. Sie können auch gewünschte Befehle 11 von Kind-Ebenen empfangen und diese mit eigenen Anforderungen 8 verrechnen.

Auf Fahrzeugebene werden die Längs- und Queranforderungen durch eine dynamische Vorsteuerung mit personalisierbarem Fahrzeugansprechverhalten und Dämpfungseigenschaften bestimmt. Zentrales Element auf Fahrwerksebene ist ein modellprädiktiver Regler (MPC), der die Kräfte des Kurvenmoduls unter Berücksichtigung von Stabilitäts- und Energiegrenzen anfordert. Zur Beschreibung der Fahrwerksdynamik wird ein Zweispurmodell verwendet. Zeitvariante Systemmatrizen werden durch Linearisierung und Diskretisierung zu jedem Abtastzeitpunkt erzeugt. Reibungskreise zwischen Reifen und Straße, die die zulässigen Kräfte an den Rädern begrenzen, werden durch Polytope approximiert. Diese Maßnahmen sollen die Anwendbarkeit der konvexen quadratischen Programmierung sicherstellen, die für die eingebettete Echtzeitoptimierung geeignet ist. Auf der Corner-Ebene verarbeiten die Module den eingehenden Strom von Fahrwerksanforderungen und erzeugen einen Strom von entsprechenden Anforderungen an die Aktuatoren. Ein MPC-Framework für Corner-Module ist in der Lage, das Radbremsmoment optimal auf die redundanten Aktuatoren an der Vorderachse aufzuteilen, während an allen Rädern Traktionskontrolle und Antiblockierfunktionen durch Radschlupfregelung bereitgestellt werden. Dieser Ansatz bietet ein schnelles Einschwingverhalten, ohne die Energierückgewinnungseffizienz der Elektromotoren zu beeinträchtigen, wobei unterschiedliche dynamische Autoritäten von Reibungsbremse und Elektromotor berücksichtigt werden.

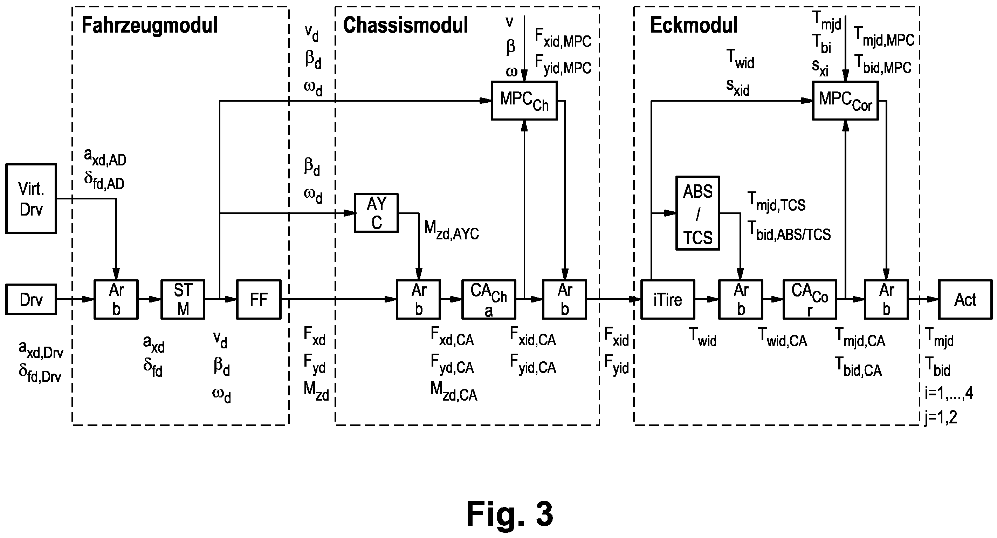

Figur 3 zeigt die Gesamtstruktur des Bewegungssteuerungs-Konzepts. Das System umfasst moderne Verfahren, wie elektronische Stabilitätskontrolle (ESC), Active Yaw Control (AYC), Anti-Blockier-Bremssystem (ABS) und Traktionskontrollsystem (TCS). Hierfür werden die Arbitrator-Blöcke (Arb) und ein inverses Reifenmodell (iTire) verwendet. Die restlichen Blöcke in der Regelungskette sind der menschliche Fahrer (Drv), ein Einzelspurmodell (STM) mit einem virtuellen Regler (VC), einer Vorwärtsregelung (FF), einer statischen Regelungszuordnung (CA), Beobachtern (Obs) und den Aktoren (Act), d. h. zwei Elektromotoren an der Vorderachse und Reibungsbremsen an jedem Rad. Die spezifischen Variablen werden im Folgenden erläutert. Ein virtueller Fahrer (Virt. Drv) kann in besonderen Situationen eingesetzt werden, um den Fahrer zu überstimmen, wodurch auch autonomes Fahren (AD) direkt integriert werden kann.

Nachfolgend wird zunächst ein allgemeiner Überblick gegeben und zunehmend detaillierter auf die systematische Herleitung und den Aufbau der Modelle sowie die generische Struktur des Optimierungsproblems eingegangen, das die Grundlage für die modellprädiktive Regelung darstellt.

Die modellprädiktive Regelung ist eine fortschrittliche optimierungsbasierte Regelungsmethode. Im Gegensatz zur linear-quadratischen (LQ) Regelung bietet MPC die explizite Behandlung von Prozessbeschränkungen, die sich aus natürlichen Anforderungen ergeben, z. B. Energieeffizienz, Sicherheit, Aktuatorgrenzen und andere. Die Regelungsentscheidungen in MPC werden online anhand eines internen Modells der Anlagendynamik berechnet.

Alle Modelle im Motion-Control-Konzept basieren im Allgemeinen auf linearen zeitvarianten diskreten Modellen mit n Zustandsvariablen im Vektor x, m Eingängen oder Steueraktionen in $\mathbf{u}$ und $\mathbf{p}$ Ausgängen in $\mathbf{y}$. Jedes zeitdiskrete Modell wird aus einem nichtlinearen zeitkontinuierlichen Modell in Zustandsraumform abgeleitet

$$\dot{x} = f(x, u), \qquad x(t_0) = x_0$$

$$y = h(x, u)$$

Das nichtlineare Zustandsraummodell wird entlang einer Referenztrajektorie für den Zustand $x_d$ und die Steueraktion $u_d$ linearisiert, was zu

$$f(x, u) \approx f(x_d, u_d) + \underbrace{\frac{\partial f}{\partial x^T}\bigg|_{x_d, u_d}}_{A} (x - x_d) + \underbrace{\frac{\partial f}{\partial u^T}\bigg|_{x_d, u_d}}_{B} (u - u_d),$$

$$h(x, u) \approx h(x_d, u_d) + \underbrace{\frac{\partial h}{\partial x^T}\bigg|_{x_d, u_d}}_{C} (x - x_d) + \underbrace{\frac{\partial h}{\partial u^T}\bigg|_{x_d, u_d}}_{D} (u - u_d).$$

führt. Das Ergebnis ist eine affine lineare Approximation des nichtlinearen Systems mit den Systemmatrizen **A, B, C, D** und den affinen Vektoren $h_x$ und $h_y$, die im Allgemeinen zeitvariant sind,

$$\dot{x} = Ax + Bu + h_x, \qquad h_x = f(x_d, u_d) - Ax_d - Bu_d,$$

$$y = Cx + Du + h_y, \qquad h_y = h(x_d, u_d) - Cx_d - Du_d.$$

Die affine Approximation ist vorteilhaft, da die Systemvariablen direkt in der Optimierung verwendet werden können und die problematische Mischung zwischen Absolutwerten und Differenz-zu-Sollwerten vermieden wird. Im Motion-Control-Konzept werden zwei Diskretisierungsverfahren eingesetzt: Das kostengünstige, aber ungenauere Euler-Vorwärtsverfahren und das genauere, aber auch teurere Tustin-(Trapez-)Verfahren. Ein diskretes Modell wird im Folgenden durch einen Index k charakterisiert. Mit der Abtastzeit $T_s$ führt die Euler-Diskretisierung für das affine System zu

$$A_k = I_n + AT_s,$$

$$B_k = BT_s, \qquad C_k = C, \qquad D_k = D,$$

$$h_{xk} = h_x T_s, \qquad h_{yk} = h_y$$

Die Tustin-Diskretisierung wird nur für nicht affine Systeme verwendet und ist durch die folgende Transformation gegeben. Dadurch ergibt sich im Allgemeinen eine direkte Durchführungsmatrix $D_k$.

$$A_k = \left(I_n - A\frac{T_s}{2}\right)^{-1} \left(I_n + A\frac{T_s}{2}\right),$$

$$B_k = \left(I_n - A\frac{T_s}{2}\right)^{-1} BT_s,$$

$$C_k = C\left(I_n - A\frac{T_s}{2}\right)^{-1},$$

$$D_k = D + C\left(I_n - A\frac{T_s}{2}\right)^{-1} B\frac{T_s}{2}$$

Bisher wird davon ausgegangen, dass der prädiktive Regler den Steuereingang $u_k$ in seiner absoluten Form berechnet. Dies ist jedoch nicht die einzige Möglichkeit, Eingänge für das System zu erzeugen. In bestimmten Anwendungen ist es vorteilhaft, Änderungen $u_k$ des Eingangs zu berechnen. Diese Formulierung wird auch als ratenbasierte oder integrale Aktionsformulierung bezeichnet. Der Grund für die Verwendung einer Reglerformulierung mit integraler Wirkung ist, eine offsetfreie Nachführung zu erhalten. Es gibt mehrere Möglichkeiten, das Reglermodell in seiner inkrementellen, integrierenden Form auszudrücken. Mit den inkrementellen Vektoren

$$\Delta x_k = x_k - x_{k-1}, \qquad \Delta u_k = u_k - u_{k-1}, \qquad \Delta y_k = y_k - y_{k-1}$$

wird im Folgenden die integrale Wirkungsform des Zustandsraumsystems angegeben, unter der Annahme, dass sich die zeitvarianten Systemmatrizen und affinen Vektoren zwischen zwei aufeinanderfolgenden Zeitabtastungen nicht sehr stark unterscheiden.

$$\Delta x_{k+1} = A_k \Delta x_k + B_k \Delta u_k + \Delta h_{xk},$$

$$y_k = y_{k-1} + C_k \Delta x_k + D_k \Delta u_k + \Delta h_{yk}$$

Die obige Systembeschreibung entspricht nicht der generischen Form, die wir weiter oben eingeführt haben. Um die generische Form auch für integrale Aktionen wiederherzustellen, wird der Systemzustand mit dem Ausgang des vorherigen Abtastintervalls erweitert. Das erweiterte System lautet dann wie folgt

$$\begin{bmatrix} \Delta x_{k+1} \\ y_k \end{bmatrix} = \begin{bmatrix} A_k & 0 \\ C_k & I_p \end{bmatrix} \begin{bmatrix} \Delta x_k \\ y_{k-1} \end{bmatrix} + \begin{bmatrix} B_k \\ D_k \end{bmatrix} \Delta u_k + \begin{bmatrix} \Delta h_{xk} \\ \Delta h_{yk} \end{bmatrix},$$

$$y_k = \begin{bmatrix} C_k & I_p \end{bmatrix} \begin{bmatrix} \Delta x_k \\ y_{k-1} \end{bmatrix} + D_k \Delta u_k + \Delta h_{yk}$$

Eine weitere vorteilhafte Verwendung des Zustandsraummodells ist es, eine Vorhersage des Systemzustands und der Ausgabe über eine bestimmte Zeitspanne in die Zukunft zu liefern. Mit dem sogenannten "Batch"-Ansatz ist es möglich, die Dynamik des Zustands- und Ausgangsvektors für einen vorgegebenen Zeithorizont N durch Rückwärtsmultiplikation der linearen Matrizen und Vektoren auszudrücken. Die Batch-Form für diskrete lineare zeitvariante affine Systeme wird wie folgt bezeichnet und muss in jedem Abtastintervall neu aufgebaut werden,

$$\begin{bmatrix} x_1 \\ x_2 \\ x_3 \\ \vdots \\ x_N \end{bmatrix} = \bar{A} x_0 + \bar{B} \begin{bmatrix} u_0 \\ u_1 \\ u_2 \\ \vdots \\ u_{N-1} \end{bmatrix} + \bar{H}_x \begin{bmatrix} h_{x0} \\ h_{x1} \\ h_{x2} \\ \vdots \\ h_{xN-1} \end{bmatrix}, \quad \begin{bmatrix} y_0 \\ y_1 \\ y_2 \\ \vdots \\ y_{N-1} \end{bmatrix}$$

$$= \bar{C} x_0 + \bar{D} \begin{bmatrix} u_0 \\ u_1 \\ u_2 \\ \vdots \\ u_{N-1} \end{bmatrix} + \bar{H}_{yx} \begin{bmatrix} h_{x0} \\ h_{x1} \\ h_{x2} \\ \vdots \\ h_{xN-1} \end{bmatrix} + \begin{bmatrix} h_{y0} \\ h_{y1} \\ h_{y2} \\ \vdots \\ h_{yN-1} \end{bmatrix}$$

$$\overline{A} = \begin{bmatrix} A_0 \\ A_1 A_0 \\ A_2 A_1 A_0 \\ \vdots \\ \prod_{j=0}^{N-1} A_{N-1-j} \end{bmatrix}, \overline{C} = \begin{bmatrix} C_0 \\ C_1 A_0 \\ C_2 A_1 A_0 \\ \vdots \\ C_{N-1} \prod_{j=0}^{N-1} A_{N-1-j} \end{bmatrix}, \overline{H}_x$$

$$= \begin{bmatrix} I_n & 0 & 0 & \cdots & 0 \\ A_1 & I_n & 0 & \cdots & 0 \\ A_2 A_1 & A_2 & I_n & \cdots & 0 \\ \vdots & \vdots & \ddots & \ddots & \vdots \\ \left(\prod_{j=1}^{N-1} A_{N-j}\right) & \left(\prod_{j=1}^{N-2} A_{N-j}\right) & \cdots & A_{N-1} & I_n \end{bmatrix}$$

$$\overline{B} = \begin{bmatrix} B_0 & 0 & 0 & \cdots & 0 \\ A_1 B_0 & B_1 & 0 & \cdots & 0 \\ A_2 A_1 B_0 & A_2 B_1 & B_2 & \cdots & 0 \\ \vdots & \vdots & \ddots & \ddots & \vdots \\ \left(\prod_{j=1}^{N-1} A_{N-j}\right) B_0 & \left(\prod_{j=1}^{N-2} A_{N-j}\right) B_1 & \cdots & A_{N-1} B_{N-2} & B_{N-1} \end{bmatrix}$$

$$\overline{D} = \begin{bmatrix} D_0 & 0 & 0 & \cdots & 0 \\ C_1 B_0 & D_1 & 0 & \cdots & 0 \\ C_2 A_1 B_1 & C_2 B_1 & D_2 & \cdots & 0 \\ \vdots & \vdots & \ddots & \ddots & \vdots \\ C_{N-1} \left(\prod_{j=1}^{N-2} A_{N-1-j}\right) B_{N-2} & C_{N-1} \left(\prod_{j=1}^{N-3} A_{N-1-j}\right) B_{N-2} & \cdots & C_{N-1} B_{N-2} & D_{N-1} \end{bmatrix},$$

$$\overline{H}_{yx} = \begin{bmatrix} 0 & 0 & 0 & \cdots & 0 \\ C_1 & 0 & 0 & \cdots & 0 \\ C_2 A_1 & C_2 & 0 & \cdots & 0 \\ \vdots & \vdots & \ddots & \ddots & \vdots \\ C_{N-1} \left(\prod_{j=1}^{N-2} A_{N-1-j}\right) & C_{N-1} \left(\prod_{j=1}^{N-3} A_{N-1-j}\right) & \cdots & C_{N-1} & 0 \end{bmatrix}$$

Im Wesentlichen basiert ein MPC-Regler auf einer iterativen Optimierung mit endlichem Horizont (constrained) eines Streckenmodells. Zu jedem diskreten Abtastzeitpunkt (k) wird die Strecke abgetastet und der Istzustand $x_k$ gemessen oder mit Hilfe von Beobachtern geschätzt. Die Leistungsfähigkeit des Reglers wird durch eine sogenannte Kostenfunktion ausgedrückt. Basierend auf einem dynamischen Modell der Strecke wird diese Kostenfunktion so formuliert, dass sie das Verhalten des MPC-Reglers in der Zukunft bei einem aktuellen Streckenzustand $x_k$ und einer Folge von zukünftigen Eingängen $u_k$ ausdrückt. Mit anderen Worten, diese vorhergesagte Kostenfunktion gibt einen numerischen Indikator für die Qualität der Regelung, unter der Annahme, dass der aktuelle Anlagenzustand durch eine bestimmte Sequenz von Eingaben aus der Vergangenheit beeinflusst wird. Die Frage ist nicht, wie die Leistung des Reglers sein wird, sondern wie die Sequenz der Eingaben $u_k$ aussieht, die die beste Leistung erzeugt. Um die optimale Sequenz von Eingaben zu berechnen, muss man die Kostenfunktion in jedem Abtastintervall mithilfe eines numerischen Optimierungsalgorithmus minimieren. Wie bei den meisten realen Anlagen können die Eingänge, Ausgänge und Zustände durch physikalische Randbedingungen begrenzt werden, die leicht in die numerische Minimierungsaufgabe einbezogen werden können. Von der Sequenz der zukünftigen Eingänge $u_k$ wird nur der erste angewendet, dann wird der Prozess auf der Basis von brandneuen gemessenen Zustandsinformationen wiederholt. Diese Art des wiederholten Zyklus Messen - Vorhersagen - Optimieren - Anwenden wird als Steuerung mit zurückgehendem Horizont bezeichnet.

Der im vorliegenden Bewegungssteuerungs-Konzept verwendete MPC-Optimierungsansatz umfasst die folgende generische Form, wobei N den Vorhersagehorizont und M den Regelhorizont bezeichnet,

$$\min_{\boldsymbol{u}_{c0:M-1},\varepsilon} J_T\left(\boldsymbol{x}_k, \boldsymbol{u}_k\right) + \gamma J_E\left(\boldsymbol{x}_k, \boldsymbol{u}_k\right) + P\varepsilon^2$$

$$\boldsymbol{x}_{k+1} = \boldsymbol{A}_k\boldsymbol{x}_k + \boldsymbol{B}_k\boldsymbol{u}_k + \boldsymbol{h}_{xk}$$

$$\boldsymbol{y}_k = \boldsymbol{C}_k\boldsymbol{x}_k + \boldsymbol{D}_k\boldsymbol{u}_k + \boldsymbol{h}_{yk}$$

$$\boldsymbol{w}_k = \boldsymbol{C}_{wk}\boldsymbol{x}_k + \boldsymbol{D}_{wk}\boldsymbol{u}_k + \varepsilon V_w$$

$$[\boldsymbol{u}_0^T, \dots, \boldsymbol{u}_{N-1}^T]^T = (\boldsymbol{M}\otimes\boldsymbol{I}_m)[\boldsymbol{u}_{c0}^T, \dots, \boldsymbol{u}_{cM-1}^T]^T$$

$$\boldsymbol{x}_0 = \boldsymbol{x}_k$$

$$\boldsymbol{u}_{min} \leq \boldsymbol{u}_k \leq \boldsymbol{u}_{max}$$

$$\boldsymbol{y}_{min} - \varepsilon V_{y,min} \leq \boldsymbol{y}_k \leq \boldsymbol{y}_{max} + \varepsilon V_{y,max}$$

$$\Delta\boldsymbol{u}_{min} - \varepsilon V_{\Delta u,min} \leq \Delta\boldsymbol{u}_k \leq \Delta\boldsymbol{u}_{max} + \varepsilon V_{\Delta u,max}$$

$$\boldsymbol{H}_{xk}\boldsymbol{x}_k + \boldsymbol{H}_{uk}\boldsymbol{u}_k \leq \boldsymbol{b}_{Hk} + \varepsilon V_H$$

$$0 \leq \varepsilon$$

$$\forall k \in \{0, \dots, N-1\}$$

Die gesamte Kostenfunktion wird in einen Trajektorienverfolgungsteil $J_T$, einen Energieverbrauchsteil $J_E$ und eine mit der Gewichtung P behaftete Schlupfvariable $\varepsilon$ unterteilt. Die Nebenbedingungen des MPC-Problems können in Gleichheits- und Ungleichheitsbedingungen unterteilt werden. Die ersten drei Gleichheitsbedingungen sind das Zustands- und Ausgabemodell der Fahrzeugdynamik in affiner Form und eine allgemeine weiche Bedingung als lineare Kombination von Zustand und Eingabe, die durch die Schlupfvariable abgeschwächt wird. Der Zielvektor $w_k$ ist entweder Null oder muss von außen vorgegeben werden. Die nächste Gleichheitsbedingung wird verwendet, um einen Kontrollhorizont zu realisieren, der kürzer als der Vorhersagehorizont ist, und zwar durch Bewegungsblockierung. Die Matrix M bestimmt das Blockierungsschema und das Operatorsymbol ist das Kronecker-Produkt. Die letzte Gleichheitsbedingung bildet den Anfangszustand auf den aktuellen Zustand der Abtastperiode ab. Die Ungleichheitsbedingungen bestimmen die Schranken für den Eingang $u_k$, den Ausgang $y_k$ und die Eingangsrate $u_k$. Die beiden letzteren werden abgeschwächt, um die Machbarkeit der Optimierung zu gewährleisten.

Eine polytopische Mengenbeschränkung, die optional aufgeweicht wird, und die Nicht-Negativität der Schlupfvariablen sind die verbleibenden Ungleichheitsbedingungen. Die für die Zielverfolgung verwendete Kostenfunktion ist quadratisch und erlaubt die Bestrafung des Ausgangsfehlers, des Eingangsfehlers und der Eingangsrate durch die symmetrischen positiv semidefiniten Gewichtungsmatrizen Q, R und $R_\Delta$.

$$J_T = \sum_{k=0}^{N} \left( (\boldsymbol{y}_k - \boldsymbol{y}_{dk})^T \boldsymbol{Q} (\boldsymbol{y}_k - \boldsymbol{y}_{dk}) \right) + \sum_{k=0}^{N-1} \left( (\boldsymbol{u}_k - \boldsymbol{u}_{dk})^T \boldsymbol{R} (\boldsymbol{u}_k - \boldsymbol{u}_{dk}) + \Delta \boldsymbol{u}_k^T \boldsymbol{R}_\Delta \Delta \boldsymbol{u}_k \right)$$

Für den Energieverbrauchsteil $J_E$ der Kostenfunktion kann jede energie- oder leistungsbezogene Funktion verwendet werden. Die einzige Einschränkung ist, dass die Kostenfunktion quadratisch und/oder linear sein muss. Mit dem Gewichtungsfaktor kann die relative Wichtigkeit der Energiekosten vorgegeben werden. Eine typische leistungsbezogene Funktion ist die Verlustleistung $P_{loss}$ von Elektromotoren, die auf der Basis des Elektromotordrehmoments $T_m$, der Raddrehzahl w und gegebener Wirkungsgradkennfelder für die Erzeugung und den Antrieb formuliert werden kann,

$$P_{loss} = \begin{cases} |T_m|\omega_w - |T_m|\omega_w \eta_{gen}(T_m, \omega_w), & T_m < 0 \\ \dfrac{T_m \omega_w}{\eta_{mot}(T_m, \omega_w)} - T_m \omega_w, & T_m \geq 0 \end{cases}$$

Die Wirkungsgradkennfelder sind im Allgemeinen nicht quadratisch, so dass eine Näherung in einem bestimmten Arbeitspunkt mit linearen und quadratischen Termen in folgender Form angewendet werden kann

$$J_E = \nabla^2 P_{loss}\big|_{T_m = T_{m0}} \Delta T_m^2 + \nabla P_{loss}\big|_{T_m = T_{m0}} \Delta T_m$$

Um das Optimierungsproblem online zu lösen, wird das folgende konvexe quadratische Programm (QP) verwendet, das zuverlässig und effizient lösbar ist.

$$\min_{\boldsymbol{z}} \frac{1}{2} \boldsymbol{z}^T \boldsymbol{H} \boldsymbol{z} + \boldsymbol{f}^T \boldsymbol{z}$$

subject to

$$\boldsymbol{A}_{eq} \boldsymbol{z} = \boldsymbol{b}_{eq}$$

$$\boldsymbol{A}_{ineq} \boldsymbol{z} \leq \boldsymbol{b}_{ineq}$$

Der Optimierungsvektor z ist gegeben durch

$$\boldsymbol{z} = [\boldsymbol{x}_0^T, \dots, \boldsymbol{x}_N^T, \boldsymbol{u}_0^T, \dots, \boldsymbol{u}_{N-1}^T, \boldsymbol{u}_{c0}^T, \dots, \boldsymbol{u}_{cM-1}^T, \varepsilon]^T.$$

Die einzigen freien Variablen für die Optimierung sind die Regeleingriffe $u_{c0..M-1}$ und der Schlupf $\varepsilon$. Für die Regelung des Systems wird nur die erste Regelgröße $u_{c0}$ verwendet. Die anderen Variablen, insbesondere der Zustand x, sind ebenfalls optimal im Sinne der QP-Optimierung und können für andere Zwecke verwendet werden, z. B. für die Transformation von Daten in nachfolgenden Schritten. Bei diesem Optimierungsvektor liegt die Optimierung in einer so genannten "sparse" oder "rekursiven" Form vor, im Gegensatz zur "dense" oder "batch" Formulierung. Bei letzterer wird der Zustand im Optimierungsproblem eliminiert, was zu einem alternativen QP-Problem führt. Die Hessian Matrix H und der Gradientenvektor f sind gegeben als

$$\boldsymbol{H} = \begin{bmatrix} \boldsymbol{Q}_{CC} & \boldsymbol{Q}_{CD} & 0 & 0 \\ \boldsymbol{Q}_{DC} & \boldsymbol{Q}_{DD} + \boldsymbol{R}_u + \boldsymbol{A}_\Delta^T \boldsymbol{R}_{\Delta u} \boldsymbol{A}_\Delta & 0 & 0 \\ 0 & 0 & 0 & 0 \\ 0 & 0 & 0 & P \end{bmatrix},$$

$$f = \begin{bmatrix} Q_C & 0 & 0 & 0 \\ Q_D & R_u & 0 & 0 \\ 0 & 0 & 0 & 0 \\ 0 & 0 & 0 & 0 \end{bmatrix} \begin{bmatrix} h_{y,pred} - y_{d,pred} \\ -u_{d,pred} \\ 0 \\ 0 \end{bmatrix} - \begin{bmatrix} 0 \\ A_\Delta^T R_{\Delta u} A_\Delta u_{-1} \\ 0 \\ 0 \end{bmatrix}$$

Mit den folgenden Vektoren

$$y_{d,pred} = [y_{d0}^T, \dots, y_{dN}^T]^T, \qquad h_{y,pred} = [h_{y0}^T, \dots, h_{yN}^T]^T,$$

$$u_{d,pred} = [u_{d0}^T, \dots, u_{dN-1}^T]^T, \qquad u_{pred} = [u_0^T, \dots, u_{N-1}^T]^T,$$

$$\Delta u_{pred} = [\Delta u_0^T, \dots, \Delta u_{N-1}^T]^T = A_\Delta u_{pred} - A_\Delta u_{-1}, \qquad u_{-1} = \underbrace{[u_{k-1}^T, \dots, u_{k-1}^T]^T}_{N-1 \text{ times}}$$

Und Matritzen der Kostenfunktion

$$Q_{CC} = \begin{bmatrix} C_0^T Q C_0 & & \\ & \ddots & \\ & & C_N^T Q C_N \end{bmatrix}, \qquad Q_{CD} = \begin{bmatrix} C_0^T Q D_0 & & \\ & \ddots & \\ & & C_{N-1}^T Q D_{N-1} \\ 0 & \cdots & 0 \end{bmatrix},$$

$$Q_{DC} = \begin{bmatrix} D_0^T Q C_0 & & 0 \\ & \ddots & \vdots \\ & D_{N-1}^T Q C_{N-1} & 0 \end{bmatrix},$$

$$Q_{DD} = \begin{bmatrix} D_0^T Q D_0 & & \\ & \ddots & \\ & & D_{N-1}^T Q D_{N-1} \end{bmatrix},$$

$$R_u = \begin{bmatrix} R & & \\ & \ddots & \\ & & R \end{bmatrix}, \qquad R_{\Delta u} = \begin{bmatrix} R_\Delta & & \\ & \ddots & \\ & & R_\Delta \end{bmatrix}, \qquad A_\Delta = \begin{bmatrix} I_m & 0 & \cdots \\ I_m & I_m & \cdots \\ \vdots & \vdots & \ddots \\ I_m & I_m & \cdots \end{bmatrix}^{-1},$$

$$Q_C = \begin{bmatrix} C_0^T Q & & \\ & \ddots & \\ & & C_N^T Q \end{bmatrix}, \qquad Q_D = \begin{bmatrix} D_0^T Q & & 0 \\ & \ddots & \vdots \\ & & D_{N-1}^T Q & 0 \end{bmatrix}$$

Die linearen Gleichheitsbeschränkungen sind durch die Matrix $A_{eq}$ und den Vektor $b_{eq}$ gegeben,

$$A_{eq} = \begin{bmatrix} -I_n & & & & 0 & \cdots & 0 & 0 & \cdots & 0 & 0 \\ A_0 & -I_n & & & B_0 & & & 0 & \cdots & 0 & 0 \\ & \ddots & \ddots & & & \ddots & & \vdots & \ddots & \vdots & \vdots \\ & & A_{N-1} & -I_n & & & B_{N-1} & 0 & \cdots & 0 & 0 \\ C_{w0} & & & 0 & D_{w0} & & & 0 & \cdots & 0 & V_w \\ & \ddots & & \vdots & & \ddots & & \vdots & \ddots & \vdots & \vdots \\ & & C_{wN-1} & 0 & & & D_{wN-1} & 0 & \cdots & 0 & V_w \\ 0 & \cdots & 0 & 0 & I_m & & & -I_m & & & 0 \\ & & & & & & & & \ddots & & \vdots \\ \vdots & \ddots & \vdots & \vdots & & \ddots & & & & -I_m & 0 \\ & & & & & & & & & \vdots & \vdots \\ 0 & \cdots & 0 & 0 & & & I_m & & & -I_m & 0 \end{bmatrix},$$

$$b_{eq} = \begin{bmatrix} x_k \\ -h_{x0} \\ \vdots \\ -h_{xN-1} \\ w_0 \\ \vdots \\ w_{N-1} \\ 0 \\ \vdots \\ 0 \\ \vdots \\ 0 \end{bmatrix}$$

Die Ungleichheitsbedingungen werden in der Matrix $A_{ineq}$ und dem Vektor $b_{ineq}$ gesammelt,

$$A_{ineq} = \begin{bmatrix} 0 & 0 & \text{diag}(I_m) & 0 & 0 \\ 0 & 0 & \text{-diag}(I_m) & 0 & 0 \\ 0 & \text{diag}(C_{k+1}) & \text{diag}(D_k) & 0 & -\overline{V}_{y,max} \\ 0 & \text{-diag}(C_{k+1}) & \text{-diag}(D_k) & 0 & -\overline{V}_{y,min} \\ 0 & 0 & A_\Delta & 0 & -\overline{V}_{\Delta u,max} \\ 0 & 0 & -A_\Delta & 0 & -\overline{V}_{\Delta u,min} \\ 0 & \text{diag}(H_{xk+1}) & \text{diag}(H_{uk}) & 0 & -\overline{V}_H \\ 0 & 0 & 0 & 0 & -1 \end{bmatrix},$$

$$b_{ineq} = \begin{bmatrix} \overline{u}_{max} \\ -\overline{u}_{min} \\ \overline{y}_{max} - \overline{h}_{y,pred} \\ -\overline{y}_{min} + \overline{h}_{y,pred} \\ \overline{\Delta u}_{max} + A_\Delta u_{-1} \\ -\overline{\Delta u}_{min} - A_\Delta u_{-1} \\ \overline{b}_H \\ 0 \end{bmatrix}$$

Der Index k reicht von Horizontschritt 0 bis N-1 und das Überstreichungssymbol kennzeichnet die entsprechenden Vektoren. Die Min- und Max-Grenzen werden hier für jeden Schritt des Horizonts wiederholt, aber wenn eine Vorhersage entlang des Horizonts verfügbar ist, können die Grenzen von Schritt zu Schritt unterschiedlich sein. Es ist anzumerken, dass das Erzwingen von Ausgabebeschränkungen im Anfangsschritt nur dann sinnvoll ist, wenn die Eingabe die beschränkten Ausgaben direkt beeinflusst. Auf der anderen Seite ist das Erzwingen von Ausgabebeschränkungen im Endschritt nur dann sinnvoll, wenn es keinen direkten Durchfluss von der Eingabe zur Ausgabe gibt. Diese Einschränkungen gelten sinngemäß auch für die Kostenfunktion.

Die Anforderungen der Bewegungssteuerung sind die folgenden:

In Geradeausfahr- oder Bremssituationen soll die Energieeffizienz Vorrang haben. In solchen Fällen sollte das maximale regenerative Bremsmoment bereitgestellt werden.

In Kurvenfahrsituationen soll die Agilität bei normalen Fahrbedingungen verbessert werden und im Grenzbereich der Reifen-Fahrbahn-Reibung soll die Fahrzeugstabilität die absolute Priorität haben.

Stabilität hat Priorität bei Ausfall eines Bremsaktors und der Antriebsstrang soll den Verzögerungsvorgang unterstützen (Stabilisierung und max. Verzögerungsleistung)

In den folgenden Abschnitten werden die Aufgaben aller Module des Motion-Control-Konzepts beschrieben und die Modelle sowie alle notwendigen Daten näher erläutert.

Die Aufgabe des Fahrzeugmanagers ist es, Sollwerte für den Fahrzeugzustand und die globalen Kräfte, die im Schwerpunkt (CoG) auf die Karosserie wirken, zu ermitteln. Der Fahrzeugmanager ist als modellbasierte Vorwärtsregelung konzipiert. Der Referenzfahrzeugzustand wird mit Hilfe eines ebenen linearen Einspurmodells ermittelt, bei dem eine Kopplung zwischen Längs- und Querbewegung nur durch die Fahrzeuggeschwindigkeit erfolgt. Die Eingabe in das Einspurmodell ist der vordere Lenkwinkel und die vom Fahrer angeforderte Beschleunigung. Optional kann ein virtueller Fahrer auch einen hinteren Lenkwinkel anfordern. In diesem Fall ist die unten beschriebene virtuelle Steuerung (VC) deaktiviert.

Der Fahrzeuglängszustand, d.h. die Referenzfahrzeuggeschwindigkeit $v_d$, wird einfach aus der Integration der angeforderten Fahrerbeschleunigung $a_{xd}$ abzüglich eines geschätzten Widerstandes, d.h. der Störgröße $a_{dis}$, ermittelt. Ohne Berücksichtigung der Störgröße wäre die Referenzfahrzeuggeschwindigkeit weniger realitätsnah und von einem Tracking-Regler nicht zu erreichen. Das Längsreferenzmodell und seine Zustandsraumdarstellung ist gegeben durch

$$\dot{v}_d = a_{xd} - a_{dis}$$

$$\boldsymbol{x} = v_d, \qquad \boldsymbol{u} = [a_{xd} \quad a_{dis}]^T, \qquad \boldsymbol{y} = \dot{v}_d,$$

$$\boldsymbol{A} = 0, \qquad \boldsymbol{B} = [1 \quad -1], \qquad \boldsymbol{C} = 0, \qquad \boldsymbol{D} = [1 \quad -1]$$

Der seitliche Fahrzeugzustand wird durch den Schwimmwinkel $\beta_d$ und die Gierrate $\omega_d$ charakterisiert. Um eine vom Fahrer wählbare Individualisierung der seitlichen Fahrzeugdynamik zu ermöglichen, wird das seitliche Einspurmodell durch einen virtuellen Hinterachslenkwinkel $\delta_{rd,VC}$ virtuell geregelt (VC). Die Idee hinter dem virtuell geregelten Einspurmodell ist es, dem Fahrer des Elektrofahrzeugs eine verbesserte Queragilität und Gierdämpfung zu bieten. Der virtuelle Hinterachslenkwinkelregler ist als linear quadratische (LQ) Zustandsraumregelung mit Verstärkung $K_x$ zusammen mit einem Vorwärtsfilter $K_w$ und einer Störgrößenkompensation $K_s$ realisiert. Der Eingang zum Feedforward-Filter ist eine quasistatische Gierrate $\omega_{stat}$, die durch die Fahrbahnhaftungsbedingungen begrenzt wird. Der vordere Lenkwinkel $\delta_{fd}$ des Fahrers wird als Störgröße betrachtet und so kompensiert, dass es einen verschwindenden stationären virtuellen Lenkwinkel gibt. Dadurch wird vermieden, dass der Fahrer adaptiv auf eine sich ändernde stationäre Gierverstärkung reagieren muss, die durch einen virtuellen Hinterachslenkwinkel ungleich Null verursacht wird. Das Open-Loop-Seitenreferenzmodell ist in Zustandsraumform gegeben durch

$$\boldsymbol{x} = \begin{bmatrix} \beta_d \\ \omega_d \end{bmatrix}, \boldsymbol{u} = \delta_{rd,VC}, \boldsymbol{s} = \delta_{fd}, \qquad \boldsymbol{A}_{ol} = \begin{bmatrix} a_{11} & a_{12} \\ a_{21} & a_{22} \end{bmatrix}, \boldsymbol{B}_u = \begin{bmatrix} b_{u1} \\ b_{u2} \end{bmatrix}, \boldsymbol{B}_s = \begin{bmatrix} b_{s1} \\ b_{s2} \end{bmatrix},$$

$$\boldsymbol{y} = \begin{bmatrix} \dot{\beta}_d \\ \dot{\omega}_d \\ a_y \end{bmatrix}, \qquad \boldsymbol{C}_{ol} = \begin{bmatrix} a_{11} & a_{12} \\ a_{21} & a_{22} \\ c_{31} & c_{32} \end{bmatrix}, \boldsymbol{D}_u = \begin{bmatrix} b_{u1} \\ b_{u2} \\ d_{u3} \end{bmatrix}, \boldsymbol{D}_s = \begin{bmatrix} b_{s1} \\ b_{s2} \\ d_{s3} \end{bmatrix}$$

Mit den Fahrzeugparametern Masse m, Gierträgheitsmoment $J_z$, seitliche Reifensteifigkeit vorne und hinten $C_f$,

$C_r$ und Abstand Schwerpunkt zur Vorder- bzw. Hinterachse $l_f$, $l_r$ ergeben sich die Matrixelemente des ungeregelten seitlichen Fahrzeugmodells

$$a_{11} = -\frac{C_f + C_r}{m v_d}, \; a_{12} = -1 - \frac{C_f l_f - C_r l_r}{m v_d^2}, \; b_{u1} = \frac{C_r}{m v_d}, \; b_{s1} = \frac{C_f}{m v_d},$$

$$a_{21} = -\frac{C_f l_f - C_r l_r}{J_z}, \; a_{22} = -\frac{C_f l_f^2 + C_r l_r^2}{J_z v_d}, \; b_{u2} = -\frac{C_r l_r}{J_z}, \; b_{s2} = \frac{C_f l_f}{J_z},$$

$$c_{31} = -\frac{C_f + C_r}{m}, \; c_{32} = -\frac{C_f l_f - C_r l_r}{m v_d}, \; d_{u3} = \frac{C_r}{m}, \; d_{s3} = \frac{C_f}{m}$$

Das Regelgesetz für den virtuellen hinteren Lenkwinkel ist wie folgt gegeben, wobei alle Reglerverstärkungen durch die Längsreferenzgeschwindigkeit vorgegeben sind,

$$\boldsymbol{u} = -\boldsymbol{K_x x} - \boldsymbol{K_s s} + \boldsymbol{K_w} \omega_{stat}$$

Die Matrizen des geschlossenen Regelkreises unter Berücksichtigung des vorderen Lenkwinkels und der statischen Gierrate als neue Eingänge haben die Form

$$\boldsymbol{A} = \boldsymbol{A_{ol}} - \boldsymbol{B_u K_x}, \qquad \boldsymbol{B} = [\boldsymbol{B_s} - \boldsymbol{B_u K_s} \quad \boldsymbol{B_u K_w}],$$

$$\boldsymbol{C} = \boldsymbol{C_{ol}} - \boldsymbol{D_u K_x}, \qquad \boldsymbol{D} = [\boldsymbol{D_s} - \boldsymbol{D_u K_s} \quad \boldsymbol{D_u K_w}]$$

Die statische Gierrate wird aus einem stationären Einspurmodell abgeleitet und ist durch die Reifen-Fahrbahn-Reibung begrenzt, die durch den Koeffizienten $\mu$ charakterisiert ist. Die restlichen Parameter sind die Erdbeschleunigungskonstante g und der Radstand $l = l_f + l_r$,

$$\omega_{stat} = \text{sign}(\delta_{fd}) \cdot \min(|\omega_{drv}|, |\omega_\mu|),$$

$$\omega_{drv} = \delta_{fd} \frac{v_d}{l + EG v_d^2}, \qquad \omega_\mu = \frac{\mu g}{v_d}, \qquad EG = \frac{m}{l}\left(\frac{l_r}{C_f} - \frac{l_f}{C_r}\right)$$

Das geregelte Einspurmodell, das sowohl die Längs- als auch die Querbewegung enthält, wird in der weiter oben beschriebenen "batch"- form verarbeitet, um die Referenzdaten für den gesamten Vorhersagehorizont zu liefern.
Der nächste Schritt in der Regelungskette ist eine nichtlineare Vorwärtsregelung mit hier sogenannten Referenzglobalkräften als Ausgang. Die Referenzglobalkräfte, d. h. die Längskraft $F_{xd}$, die Querkraft $F_{yd}$ und das auf den Schwerpunkt wirkende Giermoment $M_{zd}$, werden aus dem folgenden nichtlinearen Fahrdynamikmodell in Zustandsraumform abgeleitet. Von allen möglichen Störkräften wird nur der Windwiderstand mit dem aerodynamischen Widerstandsbeiwertparameter $k_x$ berücksichtigt. Die Fahrzeugdynamik wird in einem körperfesten Koordinatensystem beschrieben, dessen Ursprung im Schwerpunkt liegt. Die nichtlineare Systemdynamik in input-affiner Form und die nichtlinearen Ausgangsgleichungen sind gegeben durch

$$\begin{bmatrix} \dot{v}_x \\ \dot{v}_y \\ \dot{\omega} \end{bmatrix} = \begin{bmatrix} v_y \omega - \dfrac{k_x}{m} v_x^2 \\ -v_x \omega \\ 0 \end{bmatrix} + \begin{bmatrix} \dfrac{1}{m} & 0 & 0 \\ 0 & \dfrac{1}{m} & 0 \\ 0 & 0 & \dfrac{1}{J_z} \end{bmatrix} \begin{bmatrix} F_{xd} \\ F_{yd} \\ M_{zd} \end{bmatrix},$$

$$\begin{bmatrix} v_d \\ \beta_d \\ \omega_d \end{bmatrix} = \begin{bmatrix} \sqrt{v_x^2 + v_y^2} \\ \arctan \dfrac{v_y}{v_x} \\ \omega \end{bmatrix}$$

**Die Flachheitseigenschaft** der Referenzausgänge $v_d$, $\beta_d$ und $\omega_d$, wird ausgenutzt, um die globalen Referenzkräfte durch eine flachheitsbasierte Inversion zu berechnen, d. h. die globalen Kräfte sind Funktionen der Referenzausgänge und ihrer ersten Ableitungen als Eingänge. Insbesondere für die Längsreferenzkraft ergibt die Inversion

$$F_{xd} = m\big(\dot{v}_d \cos \beta_d - v_d(\dot{\beta}_d + \omega_d) \sin \beta_d\big) + k_x v_d^2(1 - sin^2\beta_d)$$

Besonderes Augenmerk muss auf die Störungen gelegt werden. Die Referenzgeschwindigkeit $v_d$ enthält bereits Längsstörungen und die Verwendung der vorherigen Gleichung kann zu Verwirrung beim Fahrer führen. Eine gewünschte Null-Beschleunigung sollte zu einer Null-Längsreferenzkraft $F_{xd}$ führen. Daher müssen alle störungsbezogenen Terme eliminiert werden. Zu diesem Zweck wird im nächsten Abschnitt die geschätzte Störung $a_{dis}$ beschrieben und ein Kurvenstörterm in die Gleichung eingefügt. Insgesamt beschreibt das folgende Modell die gewünschten globalen Kräfte, das zu jedem Abtastzeitpunkt für eine N-schrittige Vorhersage verarbeitet wird,

$$\begin{bmatrix} F_{xd} \\ F_{yd} \\ M_{zd} \end{bmatrix} = \begin{bmatrix} m\big(\dot{v}_d \cos \beta_d - v_d(\dot{\beta}_d + \omega_d) \sin \beta_d\big) + m\big(a_{dis} + \beta_d a_{yd}\big) \\ m\big(\dot{v}_d \sin \beta_d + v_d(\dot{\beta}_d + \omega_d) \cos \beta_d\big) \\ J_z \dot{\omega}_d \end{bmatrix}$$

Es gibt zwei Aufgaben des Fahrzeugbeobachters: die Bestimmung des Vorhersagehorizonts der Fahrereingabe und die Abschätzung einer auf das Fahrzeug wirkenden Längsstörung $a_{dis}$.

Es gibt zwei Hauptansätze zur Vorhersage des Fahrerhorizonts, vorausgesetzt, es sind keine Karten- oder Umgebungssensorinformationen verfügbar. Der erste Ansatz besteht darin, einfach den aktuellen Beschleunigungs- und Lenkwert über den Vorhersagehorizont zu halten. Der zweite Ansatz basiert auf einer Kurvenanpassung. Es werden ein paar letzte Abtastwerte gespeichert und eine Kurve durch Interpolation, z. B. mit einem Polynom, an die Daten angepasst. Das Polynom wird dann für die Extrapolation über den gesamten Vorhersagehorizont verwendet. Im Folgenden wurde der Einfachheit halber der erste Ansatz gewählt.

Für die Störungsabschätzung wird ein Luenberger-Störungsbeobachter mit zwei Zuständen, geschätzter Fahrzeuggeschwindigkeit $v_e$ und Längsstörung $a_{dis}$ und als Eingang die gewünschte Fahrerbeschleunigung $a_{xd}$ entworfen. Der Ausgang ist die geschätzte Fahrzeuggeschwindigkeit $v_e$, die mit der tatsächlichen Fahrzeuggeschwindigkeit $v$ verglichen wird, um den Schätzfehler zu reduzieren. Der Luenberger-Beobachter hat die folgende zeitkontinuierliche, lineare, zeitinvariante Zustandsraumform

$$\begin{bmatrix} \dot{v}_e \\ \dot{a}_{dis} \end{bmatrix} = \begin{bmatrix} 0 & -1 \\ 0 & 0 \end{bmatrix} \begin{bmatrix} v_e \\ a_{dis} \end{bmatrix} + \begin{bmatrix} 1 \\ 0 \end{bmatrix} a_{xd} + \begin{bmatrix} L_1 \\ L_2 \end{bmatrix} (v - v_e),$$

$$v_e = \begin{bmatrix} 1 & 0 \end{bmatrix} \begin{bmatrix} v_e \\ a_{dis} \end{bmatrix}$$

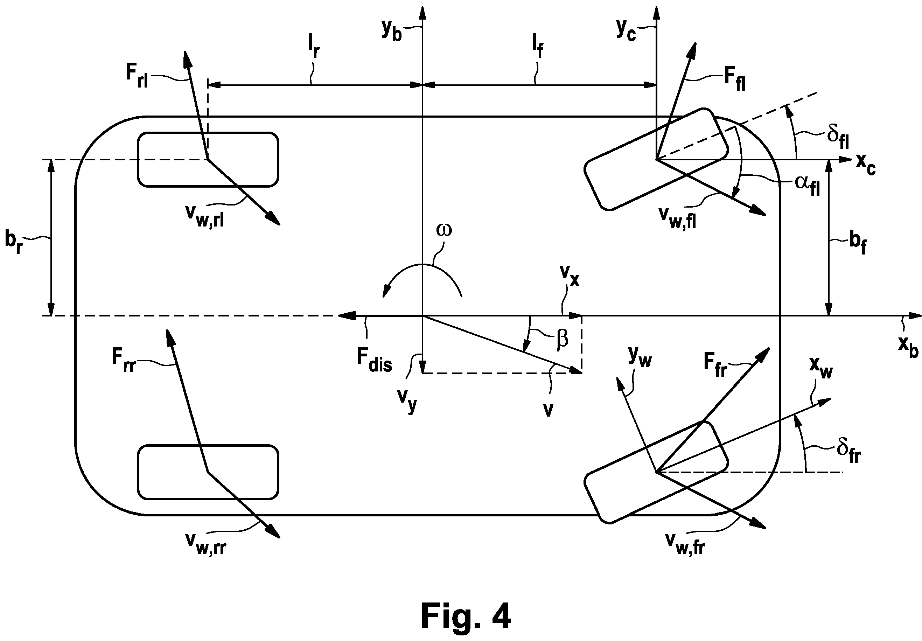

Die Beobachterverstärkungen $L_1$ und $L_2$ werden mit der linear quadratischen (LQ) Methode entworfen und danach wird der kontinuierliche Störungsbeobachter mit der Tustin-Methode diskretisiert. Die geschätzte Längsstörung, die der Fahrzeugbeobachter liefert, wird über den Vorhersagehorizont konstant gehalten. Die Aufgabe des Chassis-Managers ist es, optimierte Längs- und Querkräfte an jeder Ecke des Fahrzeugs bereitzustellen. Figur 4 zeigt die geometrischen und kinematischen Größen sowie die Kräfte, die im Motion-Control-Konzept berücksichtigt werden. Die Fahrzeugbewegung wird in einem horizontalen, körperfesten Koordinatensystem (Index "b") beschrieben. Im Folgenden werden zwei Arten von Hilfskoordinatensystemen verwendet. Die erste Art sind Systeme, die in jeder Fahrwerksecke (Index "c") fixiert sind, aber die gleiche Orientierung wie das körperfeste System haben. Der zweite Typ sind Systeme, die in jeder Radecke fixiert und um den Radlenkwinkel gedreht sind (Index "w"). An jedem Rad haben das Chassis-Ecksystem und das Rad-Ecksystem den gleichen Ursprung. Für das Motion-Control-Konzept der beschriebenen Ausführungsform wurde entschieden, dass der Chassismanager die im Chassis-Ecksystem vorgegebenen optimierten Eckkräfte liefert.

Die Verwendung von Radeckkräften wäre eine Alternative, wobei die Bewegungsgleichungen komplexer ausgebildet sind.

Die erste Aufgabe des Chassis-Managers ist die Ermittlung der gewünschten Referenz- Chassis-Eckkräfte, die sich aus den vom Fahrzeugmanager gelieferten globalen Referenzkräften ergeben. Dazu wird ein statischer Regelzuweisungsansatz auf der Basis einer Pseudo-Inverse mit Gewichtungsmatrix $W_u$ gewählt. Der Zusammenhang zwischen den globalen Kräften und den Chassis-Eckkräften ist mit der Verteilungsmatrix G und dem Parametern Spurweite an Vorder- und Hinterachse, $b_f$ bzw. $b_r$, gegeben durch

$$[F_{xd} \quad F_{yd} \quad M_{zd}]^T = \boldsymbol{G}\boldsymbol{u}^c,$$

$$\boldsymbol{u}^c = [F_{xd,fl} \quad F_{yd,fl} \quad F_{xd,fr} \quad F_{yd,fr} \quad F_{xd,rl} \quad F_{yd,rl} \quad F_{xd,rr} \quad F_{yd,rr}]^T,$$

$$\boldsymbol{G} = \begin{bmatrix} 1 & 0 & 1 & 0 & 1 & 0 & 1 & 0 \\ 0 & 1 & 0 & 1 & 0 & 1 & 0 & 1 \\ -b_f & l_f & b_f & l_f & -b_r & -l_r & b_r & -l_r \end{bmatrix}$$

Die obige Beziehung zwischen globalen und Fahrwerkseckkräften ist ein unterbestimmtes lineares System, das nicht eindeutig für $u^c$ gelöst werden kann. Es existieren zahlreiche Methoden, um die verbleibenden Freiheitsgrade auszunutzen. Wir haben eine gewichtete Moore-Penrose-Pseudoinverse gewählt, die sich aus der Minimierung der gewichteten 2-Norm $\boldsymbol{u}^T\boldsymbol{W_u}^T\boldsymbol{W_u}\boldsymbol{u}$ ergibt, wobei $W_u$ eine positive Diagonalmatrix ist.

Die Transformation zwischen Chassiseck- und Radeckkoordinaten ist mit der Drehmatrix möglich $\boldsymbol{T^{cw}}$,

$$\boldsymbol{u}^c = \boldsymbol{T^{cw}}\boldsymbol{u}^w, \qquad \boldsymbol{u}^w = \boldsymbol{T^{wc}}\boldsymbol{u}^c = (\boldsymbol{T^{cw}})^T\boldsymbol{u}^c, \qquad \boldsymbol{v}_w^w = \boldsymbol{T^{wc}}\boldsymbol{v}_w^c$$

$$\boldsymbol{T^{cw}} = \begin{bmatrix} \cos\delta_f & -\sin\delta_f & 0 & 0 & 0 & 0 & 0 & 0 \\ \sin\delta_f & \cos\delta_f & 0 & 0 & 0 & 0 & 0 & 0 \\ 0 & 0 & \cos\delta_f & -\sin\delta_f & 0 & 0 & 0 & 0 \\ 0 & 0 & \sin\delta_f & \cos\delta_f & 0 & 0 & 0 & 0 \\ 0 & 0 & 0 & 0 & \cos\delta_r & -\sin\delta_r & 0 & 0 \\ 0 & 0 & 0 & 0 & \sin\delta_r & \cos\delta_r & 0 & 0 \\ 0 & 0 & 0 & 0 & 0 & 0 & \cos\delta_r & -\sin\delta_r \\ 0 & 0 & 0 & 0 & 0 & 0 & \sin\delta_r & \cos\delta_r \end{bmatrix}$$

Wie bereits oben erwähnt, werden die Bezugseckkräfte in den Chassis-Ecksystemen benötigt. Für die statische Regelungszuordnung ist es jedoch günstiger, die Eckkräfte in den Radkoordinatensystemen zu gewichten und dann eine Transformation zurück in die Chassissysteme vorzunehmen. Der Grund dafür ist, dass zur Erreichung des Ziels der Energieeffizienz der primäre Zweck der Wichtungsmatrix $W_u$ darin besteht, die Elektromotoren an der Vorderachse zu bevorzugen, bevor die Reibbremsen an beiden Achsen eingesetzt werden. Die Radlängseckkräfte entsprechen direkt den Drehmomenten an den Rädern, so dass die hinteren Radlängseckkräfte niedriger gewichtet werden als die anderen Kräfte. Das gesamte statische Regelungszuordnungsverfahren ist dann vorgegeben durch

$$\boldsymbol{u}_d = \boldsymbol{T^{cw}}\boldsymbol{W}_u^{-1}\boldsymbol{B}_g^T\left(\boldsymbol{B}_g\boldsymbol{W}_u^{-1}\boldsymbol{B}_g^T\right)^{-1}[F_{xd} \quad F_{yd} \quad M_{zd}]^T,$$

$$\boldsymbol{B}_g = \boldsymbol{GT^{cw}}, \boldsymbol{W}_u = \mathrm{diag}(10^{-6}, 10^{-6}, 10^{-6}, 10^{-6}, 1, 10^{-6}, 1, 10^{-6}).$$

Die zweite Aufgabe des Chassismanagers ist es, eine modellbasierte prädiktive Regelung (MPC) für die Nachlaufregelung der Referenzzustände und Eingänge zu verwenden und alle Zustände und Regelungsaktionen in ihren Grenzen zu halten. In einem ersten Schritt wird das im Fahrzeugmanager-Abschnitt weiter oben definierte nichtlineare Fahrzeugmodell entlang der Referenzzustands- und Eingangstrajektorie linearisiert. Die Referenzeingabe $u_d$ wird durch die Referenzlängs- und -querkräfte in Chassiseckkoordinaten wie oben erläutert repräsentiert und der Referenzzustand $x_d$ wird aus den vom Fahrzeugmanager bereitgestellten Daten berechnet,

$$x_d = \begin{bmatrix} v_{xd} \\ v_{yd} \\ \omega_d \end{bmatrix} = \begin{bmatrix} v_d \cos \beta_d \\ v_d \sin \beta_d \\ \omega_d \end{bmatrix}$$

Das Ergebnis der Linearisierung sind die folgenden Matrizen und Vektoren

$$A = \begin{bmatrix} -\dfrac{2k_x v_{xd}}{m} & \omega_d & v_{yd} \\ -\omega_d & 0 & -v_{xd} \\ 0 & 0 & 0 \end{bmatrix}, \qquad B = \begin{bmatrix} \dfrac{1}{m} & 0 & 0 \\ 0 & \dfrac{1}{m} & 0 \\ 0 & 0 & \dfrac{1}{J_z} \end{bmatrix} G,$$

$$C = \begin{bmatrix} \dfrac{v_{xd}}{\sqrt{v_{xd}^2 + v_{yd}^2}} & \dfrac{v_{yd}}{\sqrt{v_{xd}^2 + v_{yd}^2}} & 0 \\ -\dfrac{v_{yd}}{v_{xd}^2 + v_{yd}^2} & \dfrac{1}{v_{xd}^2 + v_{yd}^2} & 0 \\ 0 & 0 & 1 \end{bmatrix}, \qquad D = 0,$$

$$h_x = \begin{bmatrix} v_{yd}\omega_d - \dfrac{k_x}{m} v_{xd}^2 \\ -v_{xd}\omega_d \\ 0 \end{bmatrix} + Bu_d - Ax_d - Bu_d = \begin{bmatrix} -v_{yd}\omega_d + \dfrac{k_x}{m} v_{xd}^2 \\ v_{xd}\omega_d \\ 0 \end{bmatrix},$$

$$h_y = \begin{bmatrix} \sqrt{v_{xd}^2 + v_{yd}^2} \\ \text{atan}\dfrac{v_{yd}}{v_{xd}} \\ \omega_d \end{bmatrix} - Cx_d$$

Der Zustand x, der Ausgang y und die Steueraktion u des Chassis-Managers MPC besteht aus

$$x = \begin{bmatrix} v_x & v_y & \omega \end{bmatrix}^T, \qquad y = \begin{bmatrix} v & \beta & \omega \end{bmatrix}^T$$

$$u = \begin{bmatrix} F_{xd,fl,MPC} & F_{yd,fl,MPC} & \cdots & F_{xd,rr,MPC} & F_{yd,rr,MPC} \end{bmatrix}^T$$

Für den Zustand und die Steuerungsaktion können Nebenbedingungen definiert werden, die im Folgenden beschrieben werden. Die Gleichheitsbedingungen der MPC sind die obigen Systemgleichungen, die Fahrsperre und ein Ausgleich der Längseckkräfte des Fahrwerks mit der vom Fahrzeugmanager bereitgestellten globalen Kraft, d. h.

$$w_k = F_{xd}, \qquad C_{wk} = 0, \qquad D_{wk} = \begin{bmatrix} 1 & 0 & 1 & 0 & 1 & 0 & 1 & 0 \end{bmatrix}, \qquad V_w = 1$$

Die Ungleichheitsbedingungen erhalten als $u_{min}$ die vom Chassisbeobachter vorgegebenen absoluten Kraftgrenzen $F_{max}$ an jedem Rad und als $u_{max}$ Null an der Hinterachse und die e-motorische maximale Vortriebskraft an der Vorderachse. Die Ratengrenzen werden so gewählt, dass sie symmetrisch mit +/- 100Nm in jeder Abtastzeit sind. Eine Polytop-Beschränkung approximiert den Reibungskreis an jedem Rad mit Achtecken. Die Eckpunkte des Achtecks

werden berechnet durch

$$\begin{bmatrix} P_{x,j} \\ P_{y,j} \end{bmatrix} = F_{max} \begin{bmatrix} \sin\left(2\pi\dfrac{j}{8}\right) \\ \cos\left(2\pi\dfrac{j}{8}\right) \end{bmatrix}, \qquad j = 1,\dots,8$$

Die Kanten des Achtecks lassen sich mit linearen Funktionen beschreiben und $p_m$ und $p_b$ aus den Eckpunkten ableiten, d. h. für Rad i wird die Grenze beschrieben durch

$$F_{xd,i,MPC} = p_{mj,i} F_{yd,i,MPC} + p_{bj,i}, \qquad j = 1,\dots,8, \qquad i = 1,\dots 4$$

Die Steueraktionen sind durch die Kanten begrenzt, können aber prinzipiell auf jeden gewünschten Wert innerhalb des Polytops gesteuert werden. Dies führt zu der folgenden Ungleichheitsbedingung, die aufgeweicht wird, um die Durchführbarkeit der Optimierung zu gewährleisten,

$$H_{xj,i} F_{xd,i,MPC} + H_{yj,i} F_{yd,i,MPC} \le H_{j,i} + V_{Hj,i}\varepsilon, \qquad j = 1,\dots,8, \qquad i = 1,\dots,4$$

$$H_{xj,i} = \mathrm{sign}(p_{bj,i}),$$

$$H_{yj,i} = -\mathrm{sign}(p_{bj,i}) p_{mj,i},$$

$$H_{j,i} = \mathrm{sign}(p_{bj,i}) p_{bj,i},$$

$$V_{Hj,i} = 1$$

Die zweite Art von Polytop-Zwangsbedingungen ist eine Stabilitätshüllkurve, die die Gierrate $\omega$ und den hinteren Schräglaufwinkel $\alpha_r$ in einem stabilen Fahrbereich begrenzt.

Die Ecken der Hüllkurve werden mit der Reifen-Fahrbahn-Reibung $\mu$, der Gravitationskonstante g und der hinteren seitlichen Reifensteifigkeit $C_r$ definiert durch

$$\omega_{max} = \frac{\mu g}{v_d}, \qquad \alpha_{r,max} = 3\frac{F_{max,rl} + F_{max,rr}}{C_r}$$

Der hintere Schräglaufwinkel ist eine einfache nichtlineare Funktion des Ausgangs, aber eine kompliziertere Funktion des Zustands. Um eine lineare Zwangsbedingung abzuleiten, wird die nichtlineare Funktion durch Linearisierung entlang der Referenzzustände approximiert. Das Ergebnis ist eine affine lineare Funktion des Zustands, wobei die Details der zeitabhängigen Koeffizienten hier weggelassen werden,

$$\alpha_r = \beta - \frac{l_r}{v}\omega = arctan\left(\frac{v_y}{v_x}\right) - \frac{l_r}{\sqrt{v_x^2 + v_y^2}}\omega \approx c_1 v_x + c_2 v_y + c_3\omega + h_\alpha,$$

Bei Anwendung der gleichen Methode wie für den Reibungskreis ergibt sich die Hüllkurvenbedingung wie folgt

$$H_{1l} v_x + H_{2l} v_y + H_{3l}\omega \le H_{0l} + V_{Hl}\varepsilon, \qquad l = 1,\dots,4,$$

$$H_{1l} = -\mathrm{sign}(p_{bl}) p_{ml} c_1,$$

$$H_{2l} = -\text{sign}(p_{bl})p_{ml}c_2,$$

$$H_{3l} = \text{sign}(p_{bl})(1 - p_{ml}c_3),$$

$$H_{0l} = \text{sign}(p_{bl})(p_{ml}h_\alpha + p_{bl}),$$

$$V_{Hl} = 1$$

Das Sammeln aller Nebenbedingungen in den Gesamtmatrizen $H_{xk}$ und $H_{uk}$ und dem weiter oben eingeführten Vektor $b_H$ führt zu den folgenden Ergebnissen, wobei die hinteren und vorderen Nullen jeweils dem Nicht-Null-Block in der anderen Matrix entsprechen,

$$\boldsymbol{H}_{xk+1} = \begin{bmatrix} H_{11} & H_{21} & H_{31} \\ \vdots & \vdots & \vdots \\ H_{14} & H_{24} & H_{34} \\ 0 & 0 & 0 \\ \vdots & \vdots & \vdots \\ 0 & 0 & 0 \end{bmatrix},$$

$$\boldsymbol{H}_{uk} = \begin{bmatrix} 0 & 0 & 0 & 0 & 0 & 0 & 0 & 0 \\ \vdots & \vdots & \vdots & \vdots & \vdots & \vdots & \vdots & \vdots \\ 0 & 0 & 0 & 0 & 0 & 0 & 0 & 0 \\ H_{x1,fl} & H_{y1,fl} \\ \vdots & \vdots \\ H_{x8,fl} & H_{y8,fl} \\ & & H_{x1,fr} & H_{y1,fr} \\ & & \vdots & \vdots \\ & & H_{x8,fr} & H_{y8,fr} \\ & & & & H_{x1,rl} & H_{y1,rl} \\ & & & & \vdots & \vdots \\ & & & & H_{x8,rl} & H_{y8,rl} \\ & & & & & & H_{x1,rr} & H_{y1,rr} \\ & & & & & & \vdots & \vdots \\ & & & & & & H_{x8,rr} & H_{y8,rr} \end{bmatrix}, \boldsymbol{b}_{Hk} = \begin{bmatrix} H_{01} \\ \vdots \\ H_{04} \\ H_{1,fl} \\ \vdots \\ H_{8,fl} \\ H_{1,fr} \\ \vdots \\ H_{8,fr} \\ H_{1,rl} \\ \vdots \\ H_{8,rl} \\ H_{1,rr} \\ \vdots \\ H_{8,rr} \end{bmatrix}$$

An dieser Stelle ist eine Bemerkung zu anderen Fahrzeugkonfigurationen als der hier beschriebenen angebracht. In anderen Konfigurationen sind typischerweise das Rad an einer Achse durch mechanische Verbindungen gekoppelt. Die

Lenkung oder der Antriebsstrang sind typische Beispiele. Betrachtet man z.B. ein Fahrzeug mit einem einzelnen Elektromotor, der mit einem Differentialgetriebe an der Vorderachse gekoppelt ist, dann können zusätzliche Gleichheitsbedingungen die Kopplungseffekte zwischen linkem und rechtem Rad abbilden. Diese Kopplungen können unter der Annahme eines Übersetzungsverhältnisses von 1 mit den Gleichheitsbedingungen modelliert werden

$$\omega_m = \frac{1}{2}\left(\omega_{w,fl} + \omega_{w,fr}\right),$$

$$T_{w,fl} = \frac{1}{2} T_m,$$

$$T_{w,fr} = \frac{1}{2} T_m$$

Diese Zwangsbedingungen müssen mit äquivalenten Zuständen oder Eingaben, d. h. Kräften, vom Fahrzeug- und Fahrwerksbeobachter ausgedrückt werden, so dass die generische Gleichheitsbedingung von weiter oben angewendet werden kann.

Die Hauptaufgabe des Chassisbeobachters ist es, Abschätzungen der maximal zulässigen Kräfte an jeder Ecke zu liefern. Die maximalen Kräfte $F_{max}$ sind Funktionen der Radlast $F_z$ und der Reibung $\mu$, eines Reifenparameters $k_{Fz}$ und der Nennradlast $F_{z0}=mg/4$ gemäß

$$\begin{bmatrix} F_{max,fl} \\ F_{max,fr} \\ F_{max,rl} \\ F_{max,rr} \end{bmatrix} = \begin{bmatrix} F_{z,fl}\mu_{fl}\left(1 + k_{Fz}\dfrac{F_{z0} - F_{z,fl}}{F_{z0}}\right) \\ F_{z,fr}\mu_{fr}\left(1 + k_{Fz}\dfrac{F_{z0} - F_{z,fr}}{F_{z0}}\right) \\ F_{z,rl}\mu_{rl}\left(1 + k_{Fz}\dfrac{F_{z0} - F_{z,rl}}{F_{z0}}\right) \\ F_{z,rr}\mu_{rr}\left(1 + k_{Fz}\dfrac{F_{z0} - F_{z,rr}}{F_{z0}}\right) \end{bmatrix}$$

Die vertikalen Reifenkräfte werden mit einem quasistationären Modell ohne Aufhängungsdynamik auf der Grundlage der gemessenen Längs- und Querbeschleunigung unter Verwendung der Höhe h des CoG nach folgendem Modell geschätzt

$$\begin{bmatrix} F_{z,fl} \\ F_{z,fr} \\ F_{z,rl} \\ F_{z,rr} \end{bmatrix} = \begin{bmatrix} \dfrac{m}{l}(l_r g - h a_x)\left(\dfrac{1}{2} - \dfrac{h}{2b_f g}a_y\right) \\ \dfrac{m}{l}(l_r g - h a_x)\left(\dfrac{1}{2} + \dfrac{h}{2b_f g}a_y\right) \\ \dfrac{m}{l}(l_f g + h a_x)\left(\dfrac{1}{2} - \dfrac{h}{2b_r g}a_y\right) \\ \dfrac{m}{l}(l_f g + h a_x)\left(\dfrac{1}{2} + \dfrac{h}{2b_r g}a_y\right) \end{bmatrix}$$

Idealerweise ist der Reibungskoeffizient zwischen Reifen und Straße bekannt, z.B. durch Straßenzustandsbeobachter. Eine konzeptionelle Lösung, die auf Konnektivität basiert, ist hierzu bereits verfügbar. Fahrzeuge, die mit Vehicle-to-Infrastructure (V2I)-Konnektivität ausgestattet sind, veröffentlichen ihre Straßenzustandsdaten, die durch On-Board-Fusion von Fahrdynamiksensordaten, Kameradaten und anderen Sensordaten erzeugt werden. Die Abonnenten der Daten sind mit der cloudbasierten Straßenzustandsdatenbank eHorizon verbunden und profitieren von häufig aktualisierten Reibungsdaten. Wenn die Straßenbedingungen nicht homogen sind, kann eine grobe Schätzung der radindividuellen Reibung aus der Split-Erkennung von modernem ABS und TCS abgeleitet werden.

Der Cornermanager hat drei Aufgaben: die Verfolgung der vom Chassismanager bereitgestellten optimalen Horizontalkräfte, die Maximierung der Energieeffizienz durch optimierte Drehmomentmischung zwischen Elektromotor und Reibungsbremse und die Vermeidung von Radblockierung oder Überdrehen durch Schlupfregelung. Der Cornermanager nutzt ein inverses Reifenmodell, um Referenzdaten für die MPC-basierte Optimierung zu ermitteln. Je nach Antriebskonfiguration können die Referenzen Raddrehmoment, Schlupf, Drehgeschwindigkeit und sogar Lenkwinkelreferenzen sein. Zur Berechnung all dieser Referenzdaten wird ein Pacejka-Reifenmodell in Vektorform verwendet, obwohl eine Referenzdrehgeschwindigkeit und ein Referenzlenkwinkel im hier beschriebenen Motion-Control-Konzept nicht zwingend erforderlich sind. Bitte beachten Sie, dass im Folgenden ein einzelnes Rad betrachtet wird und daher alle Vektoren zwei Komponenten haben, wenn nicht anders angegeben. Das Pacejka-Modell bestimmt die Radkräfte unter Verwendung einer bekannten nichtlinearen Funktion mit dem Schlupfvektor s als Eingabe und mit $F_{max}$ und den Reifenparametern B und C,

$$\begin{bmatrix} F_x \\ F_y \end{bmatrix} = F_{max} \sin\big(Carctan(B|\boldsymbol{s}|)\big) \frac{1}{|\boldsymbol{s}|} \begin{bmatrix} s_x \\ s_y \end{bmatrix}, \qquad |\boldsymbol{s}| = \sqrt{s_x^2 + s_y^2}$$

Das inverse Reifenmodell, d. h. eine Bestimmung des Längs- und Querschlupfes aus den Radkräften ist gegeben durch

$$\begin{bmatrix} s_x \\ s_y \end{bmatrix} = \frac{1}{B} \tan\left(\frac{1}{C} \arcsin \frac{|\boldsymbol{F}|}{F_{max}}\right) \frac{1}{|\boldsymbol{F}|} \begin{bmatrix} F_x \\ F_y \end{bmatrix}, \qquad |\boldsymbol{F}| = \sqrt{F_x^2 + F_y^2}$$

Um eine Division durch Null zu vermeiden, benötigen die Reifenmodelle einen absoluten Schlupf bzw. eine absolute Kraft ungleich Null. In unserer Anwendung setzen wir den Schlupf auf Null, wenn die absolute Kraft Null ist. Es ist zu beachten, dass der Schlupf im inversen Reifenmodell nur für F < $F_{max}$ eindeutig definiert ist.

Unter Verwendung des aus dem inversen Reifenmodell berechneten Schlupfes kann ein Lenkwinkel am Rad ermittelt werden, vorausgesetzt, die Radgeschwindigkeiten sind gegeben und $v_{wx}$ ist nicht Null,

$$\delta = \arctan\left(\frac{s_y|\boldsymbol{v}_w| + v_{wy}}{s_x|\boldsymbol{v}_w| + v_{wx}}\right), \qquad |\boldsymbol{v}_w| = \sqrt{v_{wx}^2 + v_{wy}^2}$$

Im Stillstand kann der Lenkwinkel $\delta > 0$ aus dem vorherigen Schritt gehalten und konstant gehalten werden. Zusätzlich kann, falls erforderlich, die Raddrehzahl aus

$$\omega_w = \frac{1}{r_w} \sqrt{(s_x|\boldsymbol{v}_w| + v_{wx})^2 + \big(s_y|\boldsymbol{v}_w| + v_{wy}\big)^2}$$

bestimmt werden.

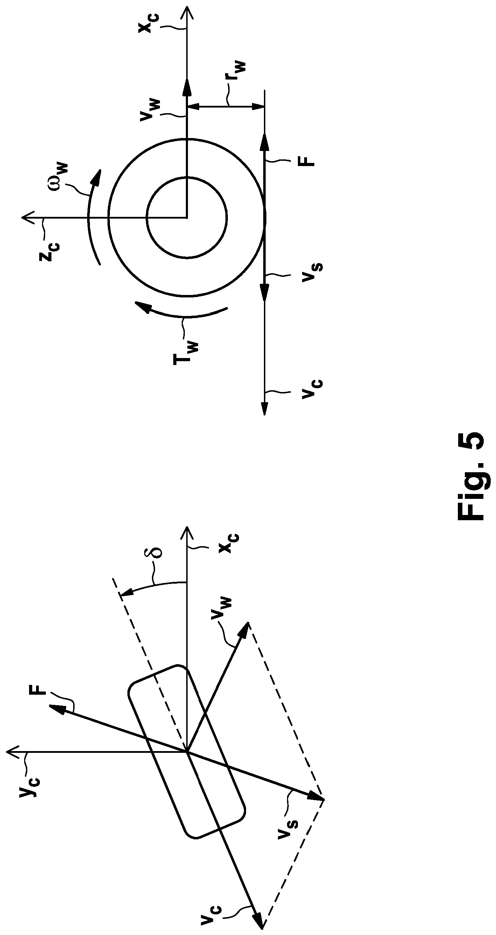

Es ist erwähnenswert, dass in allen Gleichungen, die auf dem inversen Reifenmodell basieren, bisher kein Koordinatensystem angegeben wurde, d.h. die Koordinaten können entweder im Chassis- oder Radeckensystem angegeben werden. Um sich für die am besten geeigneten Koordinaten zu entscheiden, ist eine genauere Betrachtung der Radvektoren hilfreich, siehe Figur 5.

Figur 5 zeigt ein sich bewegendes Rad in einer Kurvensituation. Die Drehung des Rades mit der Geschwindigkeit $\omega_w$ erzeugt eine Umfangsgeschwindigkeit vc, die im Chassisecksystem gegeben ist als

$$\boldsymbol{v}_c^c = -\omega_w r_w \begin{bmatrix} \cos\delta \\ \sin\delta \end{bmatrix}.$$

Die Vektorsumme aus der Umfangsgeschwindigkeit und der Translationsgeschwindigkeit ergibt die sogenannte Schlupf- oder Gleitgeschwindigkeit $v_s$. Es wird angenommen, dass die Eckkraft immer in die entgegengesetzte Richtung der Gleitgeschwindigkeit zeigt. Der Radschlupf ist dann nur die mit der absoluten Radgeschwindigkeit normierte Gleitgeschwindigkeit, d. h.

$$\boldsymbol{s} = \begin{bmatrix} s_x \\ s_y \end{bmatrix} = -\frac{1}{|\boldsymbol{v}_w|} \boldsymbol{v}_s = -\frac{1}{|\boldsymbol{v}_w|}(\boldsymbol{v}_c + \boldsymbol{v}_w)$$

In den jeweiligen Fahrwerks- bzw. Radecksystemen liest sich der Schlupf unterschiedlich, wie aus den folgenden Varianten ersichtlich ist

$$\boldsymbol{s}^c = -\frac{1}{|\boldsymbol{v}_w|} \begin{bmatrix} -\omega_w r_w \cos\delta + v_{wx}^c \\ -\omega_w r_w \sin\delta + v_{wy}^c \end{bmatrix}, \qquad \boldsymbol{s}^w = -\frac{1}{|\boldsymbol{v}_w|} \begin{bmatrix} -\omega_w r_w + v_{wx}^w \\ v_{wy}^w \end{bmatrix}.$$

Im Folgenden bevorzugen wir die radeckenbasierte Beschreibung des Schlupfs. Für die Schlupfregelung wird ein Modell der Schlupfdynamik aus einem Viertelwagenmodell abgeleitet, das die Radrotationsdynamik mit der Radrotationsgeschwindigkeit und die Viertelwagen-Translationsdynamik mit der Radlängsgeschwindigkeit $v_{wx}$ beschreibt. Die Eingabe in das Viertelwagenmodell ist das Radmoment $T_w$. Die benötigten Parameter sind das Radträgheitsmoment $J_w$, die Viertelwagenmasse $m_q=m/4$ und der Radradius $r_w$. Die Reifenkraft $F_x$ koppelt den translatorischen und rotatorischen Teil zusammen. Das Modell ist vereinfacht, da alle Widerstände vernachlässigt werden. Das Viertelwagen-Modell ist nichtlinear, weil die Längskraft eine nichtlineare Funktion des Schlupfes ist, wie oben gesehen. Die Zustandsraumform des Viertelauto-Modells ist gegeben durch

$$\begin{bmatrix} \dot{v}_{wx} \\ \dot{\omega}_w \end{bmatrix} = \begin{bmatrix} \dfrac{1}{m_q} F_x(s_x) \\ -\dfrac{r_w}{J_w} F_x(s_x) \end{bmatrix} + \begin{bmatrix} 0 \\ \dfrac{1}{J_w} \end{bmatrix} T_w$$

Das Vorhersagemodell des Längsschlupfes ergibt sich aus der Differenzierung des Längsschlupfes nach der Zeit und dem Einsetzen der Beschleunigungen aus dem Viertelwagenmodell, wobei der obere Index w des Koordinatensystems weggelassen wurde und die seitliche Radgeschwindigkeit als Null angenommen wird,

$$s_x = \frac{\omega_w r_w - v_{wx}}{|\boldsymbol{v}_w|},$$

$$\dot{s}_x \approx \frac{r_w}{v_{wx}} \dot{\omega}_w - \frac{\omega_w r_w}{v_{wx}^2} \dot{v}_{wx} = -\frac{1}{v_{wx}} \left( \frac{r_w^2}{J_w} + \frac{\omega_w r_w}{v_{wx} m_q} \right) F_x(s_x) + \frac{r_w}{J_w v_{wx}} T_w$$

Das Schlupfmodell kann weiter vereinfacht werden, indem der Term der Winkelgeschwindigkeit vernachlässigt und die Längskraft $F_x$ linear angenähert wird, d. h. mit

$$\frac{\omega_w r_w}{v_{wx} m_q} \ll \frac{r_w^2}{J_w}, \qquad F_x(s_x) \approx k_{Fx} s_x, \qquad k_{Fx} = \begin{cases} \dfrac{F_{max}}{|s_{x,thr}|}, & |s_x| < |s_{x,thr}| \\[2mm] \dfrac{F_{max}}{|s_x|}, & |s_x| \geq |s_{x,thr}| \end{cases}$$

Die Schlupfschwelle $s_{x,thr}$ ist entweder individuell für die Traktions- und Bremssteuerung gegeben oder kann aus dem obigen inversen Reifenmodell berechnet werden. Es ist zu beachten, dass die Kraftannäherung absolut ist und nicht eine Abweichung vom Betriebspunkt beschreibt. Das Ergebnis dieser Vereinfachungen ist ein lineares zeitvariantes Schlupfmodell in Zustandsraumform

$$\boldsymbol{x}_s = s_x, \qquad \boldsymbol{u}_s = T_w, \qquad \boldsymbol{y}_s = s_x,$$

$$\boldsymbol{A}_s = -\frac{r_w^2 k_{Fx}}{J_w v_{wx}}, \boldsymbol{B}_s = \frac{r_w}{J_w v_{wx}}, \boldsymbol{C}_s = 1, \boldsymbol{D}_s = 0$$

Der Cornermanager ist auch für die Drehmomentverteilung zwischen Elektromotor und Reibungsbremse zuständig. Diese Aufgabe der dynamischen Regelungszuordnung wird von der Corner-MPC übernommen. Für jedes Rad gibt es einen Cornermanager, der die aktuelle Messung des Elektromotormoments $T_m$, des Reibungsbremsmoments $T_b$ und des Radlängsschlupfs $s_x$ benötigt. Die Motor-und Bremsaktuatoren werden mit einer einfachen Dynamik erster Ordnung mit der Zeitkonstante $T_1$ modelliert. Ausgang des Aktuatormodells ist die Summe aus Motor- und Bremsmoment, d.h. das Radmoment $T_w$. Das Zustandsraummodell der Aktuatoren ist linear zeitinvariant und gegeben durch

$$x_a = \begin{bmatrix} T_m \\ T_b \end{bmatrix}, \qquad u_a = \begin{bmatrix} T_{md,MPC} \\ T_{bd,MPC} \end{bmatrix}, \qquad y_a = T_w$$

$$A_a = \begin{bmatrix} -\dfrac{1}{T_{1m}} & 0 \\ 0 & -\dfrac{1}{T_{1b}} \end{bmatrix}, B_a + \begin{bmatrix} \dfrac{1}{T_{1m}} & 0 \\ 0 & \dfrac{1}{T_{1b}} \end{bmatrix}, C_a = \begin{bmatrix} 1 & 1 \end{bmatrix}, D_a = 0$$

Die Modelle der Aktoren und des Schlupfes werden mit der Tustin-Methode diskretisiert und dann zu dem im MPC verwendeten diskreten Gesamtmodell der Ecke kombiniert

$$x_k = \begin{bmatrix} x_a \\ x_s \end{bmatrix}, \qquad u_k = u_a, \qquad y_k = \begin{bmatrix} y_a \\ y_s \end{bmatrix} = \begin{bmatrix} T_w \\ s_x \end{bmatrix},$$

$$A_k = \begin{bmatrix} A_{ak} & 0 \\ B_{sk}C_{ak} & A_{sk} \end{bmatrix}, B_k = \begin{bmatrix} B_{ak} \\ B_{sk}D_{ak} \end{bmatrix}, C_k = \begin{bmatrix} C_{ak} & 0 \\ D_{sk}C_{ak} & C_{sk} \end{bmatrix}, D_k = \begin{bmatrix} D_{ak} \\ D_{sk}D_{ak} \end{bmatrix}$$

Die Referenzwerte für die MPC-Optimierung ergeben sich aus den Bezugseckkräften in Chassiskoordinaten,

$$y_{dk} = \begin{bmatrix} T_{wd} \\ s_{xd} \end{bmatrix} = \begin{bmatrix} r_w\left(F_{xd}^c \cos \delta + F_{yd}^c \sin \delta\right) \\ s_{xd} \end{bmatrix}, \qquad u_{dk} = \begin{bmatrix} T_{md} \\ T_{bd} \end{bmatrix} = \begin{bmatrix} T_{wd} \\ 0 \end{bmatrix}$$

Um die Energieeffizienz zu optimieren, ist der Elektromotor der bevorzugte Aktor gegenüber der Reibungsbremse. Anders als beim Chassismanager ist die statische Kurvensteuerungszuweisung zur Bereitstellung von Referenzsteuerungsaktionen beim Cornermanager quasi eine regelbasierte Zuweisung ohne die Notwendigkeit einer Pseudo-Inverse.

Gleichheitsbedingungen der MPC des Kurvenmanagers sind die Zustandsdynamik und eine Drehmomentsummenbedingung, die die Regelwirkung mit dem Soll-Radmoment abgleicht,

$$w_k = T_{wd}, \qquad C_{wk} = 0, \qquad D_{wk} = \begin{bmatrix} 1 & 1 \end{bmatrix}, \qquad V_w = 1$$

Die Ungleichheitsbedingungen sind die Ober- und Untergrenzen des Elektromotors und der Reibungsbremse. Andere Nebenbedingungen werden nicht berücksichtigt.

Die Aufgabe des Kurvenbeobachters ist es, die tatsächlichen Radschlupfdaten in Längsrichtung zu liefern. Dazu müssen die Translationsgeschwindigkeiten an jedem Rad bestimmt werden. Die acht Geschwindigkeiten in den Radeckenkoordinatensystemen werden durch eine Transformation des gemessenen Fahrzeugzustands mit den im Abschnitt Fahrwerksmanager definierten Transformationsmatrizen gegeben als

$$v_w^w = T^{wc}G^T\begin{bmatrix} v_x & v_y & \omega \end{bmatrix}^T$$

Eine weitere Aufgabe des Kurvenbeobachters ist es, die Temperatur der Reibbremsscheibe zu überwachen. Dazu wird ein Modell des Temperaturverlaufs verwendet.

Das Temperaturmodell beinhaltet die Belagflächentemperatur $\vartheta_1$ und die Scheibentemperatur $\vartheta_2$ als Zustandsgrößen. Der Eingang des Modells ist die Reibbremsleistung $P_b$ und die Umgebungslufttemperatur $\vartheta_u$. Der Ausgang ist die Bremsscheibentemperatur $\vartheta_2$. Die Parameter des Modells sind die Wärmekapazitäten $c_{b1}$, $c_{b2}$, der Wärmeleitfähigkeitswert $\lambda_b$ und die Konvektion $\alpha_b$. Die Zustandsraumform des Temperaturmodells ist

$$\begin{bmatrix} \dot{\vartheta}_1 \\ \dot{\vartheta}_2 \end{bmatrix} = \begin{bmatrix} -\dfrac{\lambda_b}{c_{b1}} & \dfrac{\lambda_b}{c_{b1}} \\ \dfrac{\lambda_b}{c_{b2}} & -\dfrac{\lambda_b + \alpha_b}{c_{b2}} \end{bmatrix} \begin{bmatrix} \vartheta_1 \\ \vartheta_2 \end{bmatrix} + \begin{bmatrix} \dfrac{1}{c_{b1}} & 0 \\ 0 & \dfrac{\alpha_b}{c_{b2}} \end{bmatrix} \begin{bmatrix} P_b \\ \vartheta_u \end{bmatrix}$$

$$\vartheta_2 = \begin{bmatrix} 0 & 1 \end{bmatrix} \begin{bmatrix} \vartheta_1 \\ \vartheta_2 \end{bmatrix}$$

Das Temperaturmodell wird verwendet, um die Scheibentemperatur zu überwachen und ein Alarmereignis zu initialisieren, wenn die Temperatur einen bestimmten Schwellenwert überschreitet. Wenn das Ereignis eintritt, muss die Fahrzeuggeschwindigkeit auf nicht mehr als 30 km/h reduziert werden. Zu diesem Zweck wird ein PID-Geschwindigkeitsregler verwendet, der mit der sogenannten Model Free Control (MFC)-Methode entworfen wurde. Der Geschwindigkeitsregler übersteuert die Beschleunigungsanforderung des Fahrers. Das Temperaturmodell ist linear und kann daher potenziell zusammen mit Beschränkungen für die Scheibentemperatur in den Corner Manager MPC integriert werden. Es ist erwähnenswert, dass die Begrenzung der Abwärme an der Reibungsbremse mit einer Reduzierung der Partikelemissionen der Bremse einhergeht.

Die Simulationsergebnisse zeigen die Gültigkeit des Bewegungssteuerungskonzepts, das anhand der angeforderten und tatsächlichen Fahrdynamikdaten erläutert und illustriert wird. Für jedes der weiter oben spezifizierten High-Level-Bewegungssteuerungsziele wird ein repräsentatives Manöver ausgewählt, um die Machbarkeit und Leistungsfähigkeit des vorgeschlagenen Steuerungskonzepts zu bewerten. In allen Simulationen beträgt die Abtastzeit der Fahrwerks-MPC Ts=10ms und der Vorhersage- und Regelhorizont N=4 bzw. M=2. Die Abtastzeiten der Kurven-MPC sind 2ms und die Horizontlängen sind identisch mit der Chassis-MPC.

Das erste Manöver, welches in den Diagrammen der Figur 6 dargestellt ist, ist ein Geradeaus-Bremsversuch, um das Front-zu-Heck-Drehmoment-Vectoring durch die Chassis-Manager-MPC und eine Bremsmomentüberlagerung durch die beiden Ecken-MPCs an der Vorderachse zu visualisieren. In der letzten Phase des Manövers führen die beiden hinteren Eck-MPCs eine Schlupfregelung durch, um ein Blockieren der Räder zu vermeiden.

Figur 6 zeigt eine Simulation eines Geradeausbremsmanövers mit Energiepriorisierung, d) und e) Drehmomentvektorisierung zwischen Vorder- und Hinterachse, g) Drehmomentverschneidung an der Vorderachse mit einer als konstant angenommenen maximalen Bremsmomentgrenze von -500 Nm, k) Schlupfregelung an der Hinterachse.

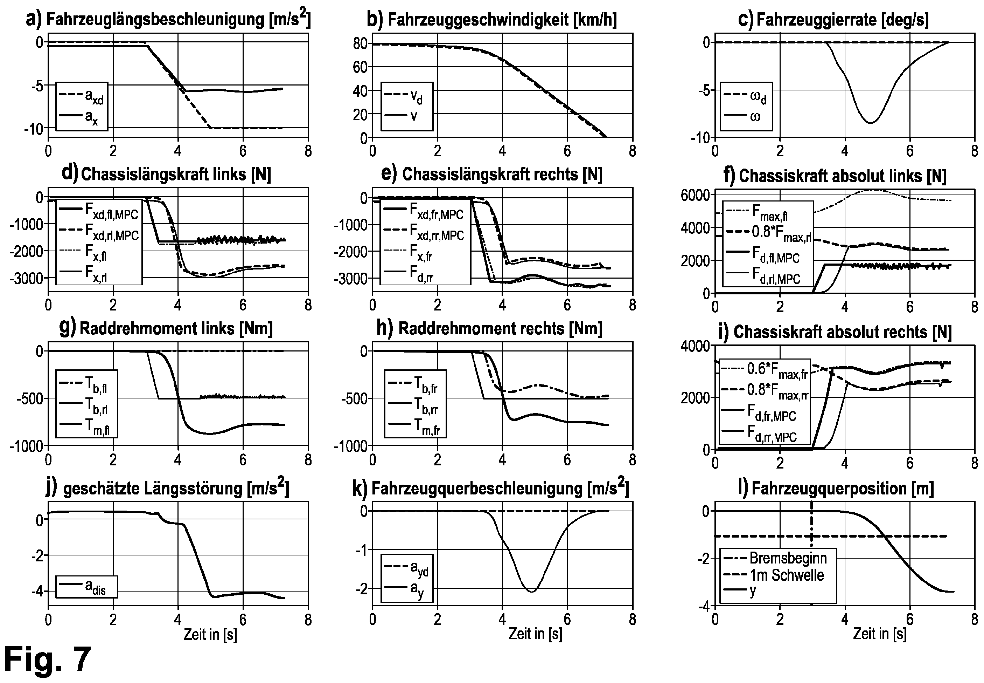

Der zweite Testfall ist derselbe wie zuvor, jedoch mit einem Ausfall des vorderen linken Reibungsbremsaktors, siehe Figur 7. Diese gefährliche Situation würde ein störendes Giermoment erzeugen, das zum sofortigen unkontrollierten Durchdrehen des Fahrzeugs führt. Mit der Bewegungssteuerung ist die Situation für den Fahrer jederzeit beherrschbar. Die Strategie besteht darin, die maximalen Kraftgrenzen an den verbleibenden gesunden Kurven zu reduzieren, um Stabilität zu gewährleisten. Die Höhe der Reduzierung wurde empirisch ermittelt. Mit dieser einfachen Maßnahme ist die Fahrwerks-MPC in der Lage, die Bremskräfte so umzuverteilen, dass dem störenden Giermoment entgegengewirkt wird und gleichzeitig die Bremsanforderung des Fahrers erfüllt wird, allerdings auf einem niedrigeren Niveau als im fehlerfreien Fall.

Figur 7 zeigt eine Simulation eines Aktuatorausfalls, g) Ausfall der Reibungsbremse vorne links, f) und i) Fahrzeugstabilität gewährleistet durch Reduzierung der maximalen Kraftauflagen an der Hinterachse um 80 % und am rechten Vorderrad um 60 %, b) und j) Verlust der in der Referenzgeschwindigkeit berücksichtigten Verzögerung durch Störungsabschätzung, l) Bahnabweichung ist durch den Fahrer beherrschbar.

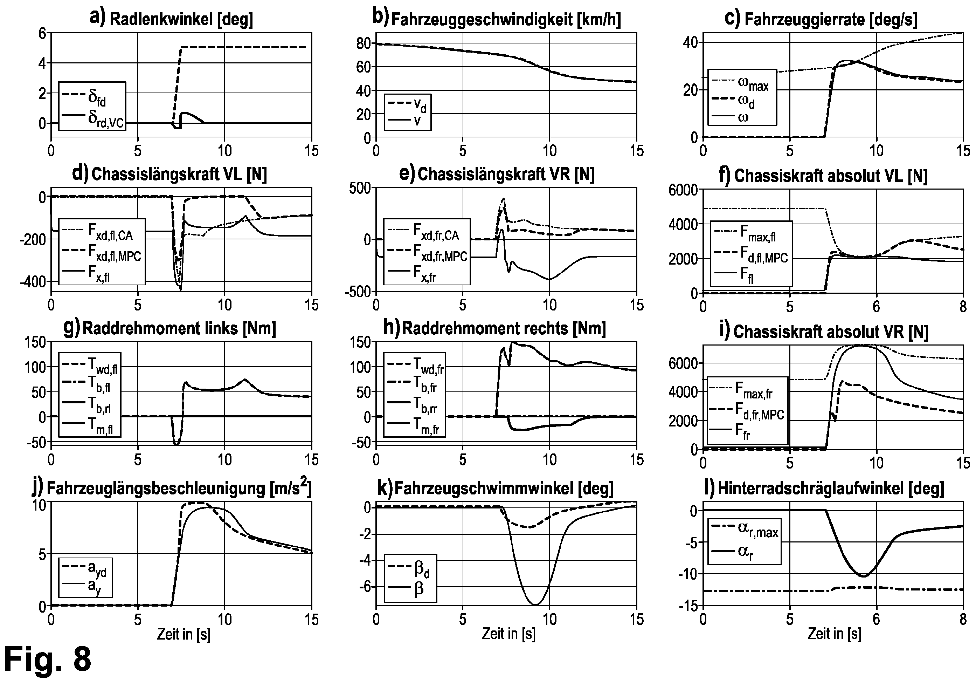

Der letzte Testfall ist ein temperamentvolles Schrittlenkmanöver, das die Fähigkeit des lateralen Torque Vectoring zur Verbesserung der Agilität bei gleichzeitiger Stabilität illustriert, siehe Figur 8. In der ersten Phase weist die Chassis-MPC dem inneren Vorderrad eine negative Kraft und dem äußeren Rad eine positive Kraft zu. Die schnellen Elektromotoren folgen den Anforderungen schnell und die Gierraten-Nachführung ist recht beeindruckend. In der folgenden Phase erreicht die innere Vorderradkraft eine Sättigung und damit auch die Gierrate, so dass der Chassis MPC die angeforderte Kraft entsprechend reduziert. Gleichzeitig teilt die Chassis-MPC dem rechten hinteren Außeneck einen kleinen Teil der Bremskraft zu, um die Stabilität zu gewährleisten. Der Betrag der Geschwindigkeitsreduzierung während der Kurvenfahrt ist aufgrund der Torque-Vectoring-Fähigkeiten der Elektromotoren sehr gering.

Figur 8 zeigt eine Simulation eines Schrittlenkmanövers mit Agilisierung und Stabilisierung, d) und e) Drehmomentvektorisierung an der Vorderachse zwischen links und rechts und an der rechten Seite zwischen vorne und hinten.

**Patentansprüche**

**1.** Verfahren zur Steuerung von auf Fahrzeugräder eines Kraftfahrzeugs (1) wirkenden Aktuatoren, wobei das Verfahren die folgenden Schritte aufweist:

- Ermitteln einer auf einen Referenzpunkt des Kraftfahrzeugs zu bewirkenden Kraft ($F_{xd}$, $F_{yd}$, $M_{zd}$) auf Grundlage von Fahrervorgaben ($a_{xd}$, $\delta_{fd}$),
- Ermitteln von auf die Fahrzeugräder zu bewirkenden Radkräften ($F_{xid}$, $F_{yid}$) zur Umsetzung der auf den Referenzpunkt des Kraftfahrzeugs zu bewirkenden Kraft ($F_{xd}$, $F_{yd}$, $M_{zd}$) mittels einer ersten dynamischen Allokation durch eine modellbasierte prädiktive Regelung (MPC),
- Ermitteln von Sollwerten für Radparameter ($T_{mjd}$, $T_{bjd}$) aus den ermittelten Radkräften ($F_{xid}$, $F_{yid}$), und
- Ansteuern der Aktoren des Kraftfahrzeugs zur Umsetzung der Sollwerte der Radparameter ($T_{mid}$, $T_{bjd}$), **dadurch gekennzeichnet, dass** in einem Zwischenschritt kinematische Soll-Bewegungsgrößen ($v$, $\beta$, $\omega$) über ein virtuell geregeltes Einspurmodell (STM) angepasst werden und bei der dynamischen Allokation (MPC) der Radkräfte berücksichtigt werden.

2. Verfahren nach einem der vorherigen Ansprüche, **dadurch gekennzeichnet, dass** die Fahrervorgaben ($a_{xd}$, $\delta_{fd}$) von einem virtuellen Fahrer und/oder einem Assistenzsystem zur Verfügung gestellt werden.

3. Verfahren nach einem der vorherigen Ansprüche, **dadurch gekennzeichnet, dass** es sich bei den Fahrervorgaben ($a_{xd}$, $\delta_{fd}$) um eine Beschleunigung und/oder wenigstens einen Lenkwinkel handelt.

4. Verfahren nach einem der vorherigen Ansprüche, **dadurch gekennzeichnet, dass** es sich bei den Sollwerten für die Radparameter ($T_{mjd}$, $T_{bjd}$) um auf die Räder jeweils wirkende Drehmomente, Schlupfwerte der Räder, Drehgeschwindigkeiten der Räder und/oder Lenkwinkel der Räder handelt.

5. Verfahren nach einem der vorherigen Ansprüche, **dadurch gekennzeichnet, dass** das Verfahren zur Umsetzung eines Sollwerts für ein auf ein Fahrzeugrad wirkendes Drehmoment ferner eine zweite dynamische Allokation (MPC) aufweist, die eine Schlupfregelung enthält.

6. Verfahren nach einem der vorherigen Ansprüche, **dadurch gekennzeichnet, dass** es sich bei den Aktoren um Elektromotoren und/oder Reibungsbremsen handelt.

7. Verfahren nach einem der vorherigen Ansprüche, **dadurch gekennzeichnet, dass** die dynamische Allokation (MPC) der Radkräfte ($F_{xid}$, $F_{yid}$) eine Fahrdynamikregelung enthält.

8. Verfahren nach einem der vorherigen Ansprüche, **dadurch gekennzeichnet, dass** mittels einer statischen Allokation (CA) Radkräfte ($F_{xid, CA}$, $F_{yd,CA}$), ermittelt werden und diese der dynamischen Allokation (MPC) als Eingangswerte zugeführt werden, wobei insbesondere eine Arbitration aus den ermittelten Radkräften der statischen und der dynamischen Allokation durchgeführt wird.

9. Verfahren nach einem der vorherigen Ansprüche, **dadurch gekennzeichnet, dass** die dynamische Allokation (MPC) eine Sättigung eines zugeordneten Aktors, eine Rekonfiguration zur Sicherstellung der Fehlertoleranz bei Ausfall des Aktors, eine Erhöhung der Energieeffizienz und eine Minimierung des Verschleißes umfasst.

10. Verfahren nach einem der vorherigen Ansprüche, **dadurch gekennzeichnet, dass** die ermittelten Radkräfte ($F_{xid}$, $F_{yid}$), mit einem inversen Reifenkraftmodell in Sollgrößen für Drehmomente, Radschlüpfe, Drehgeschwindigkeiten und Lenkwinkel der Räder umgerechnet werden.

**Claims**

1. Method for controlling actuators acting on vehicle wheels of a motor vehicle (1), wherein the method comprises the following steps:

   - ascertaining a force ($F_{xd}$, $F_{yd}$, $M_{zd}$) to be brought about on a reference point of the motor vehicle on the basis of driver specifications ($a_{xd}$, $\delta_{fd}$),
   - ascertaining wheel forces ($F_{xid}$, $F_{yid}$) to be brought about on the vehicle wheels to implement the force ($F_{xd}$, $F_{yd}$, $M_{zd}$) to be brought about on the reference point of the motor vehicle by means of a first dynamic allocation by model-based predictive control (MPC),
   - ascertaining setpoint values for wheel parameters ($T_{mjd}$, $T_{bjd}$) from the ascertained wheel forces ($F_{xid}$, $F_{yid}$), and
   - actuating the actuators of the motor vehicle so as to implement the setpoint values of the wheel parameters ($T_{mjd}$, $T_{bjd}$), **characterized in that**, in an intermediate step, kinematic setpoint motion variables ($v$, $\beta$, $\omega$) are adapted by way of a virtually controlled single-track model (STM) and are taken into account in the dynamic allocation (MPC) of the wheel forces.

2. Method according to one of the preceding claims, **characterized in that** the driver specifications ($a_{xd}$, $\delta_{fd}$) are made

available by a virtual driver and/or an assistance system.

3. Method according to one of the preceding claims, **characterized in that** the driver specifications ($a_{xd}$, $\delta_{fd}$) are an acceleration and/or at least one steering angle.

4. Method according to one of the preceding claims, **characterized in that** the setpoint values for the wheel parameters ($T_{mjd}$, $T_{bjd}$) are torques respectively acting on the wheels, slip values of the wheels, rotational speeds of the wheels and/or steering angles of the wheels.

5. Method according to one of the preceding claims, **characterized in that**, for implementing a setpoint value for a torque acting on a vehicle wheel, the method also has a second dynamic allocation (MPC), which includes slip control.

6. Method according to one of the preceding claims, **characterized in that** the actuators are electric motors and/or friction brakes.

7. Method according to one of the preceding claims, **characterized in that** the dynamic allocation (MPC) of the wheel forces ($F_{xid}$, $F_{yid}$) includes driving dynamics control.

8. Method according to one of the preceding claims, **characterized in that** wheel forces ($F_{xid, CA}$, $F_{yd,CA}$) are ascertained by means of a static allocation (CA) and these are fed to the dynamic allocation (MPC) as input values, wherein in particular an arbitration is carried out from the ascertained wheel forces of the static and dynamic allocation.

9. Method according to one of the preceding claims, **characterized in that** the dynamic allocation (MPC) comprises a saturation of an assigned actuator, a reconfiguration to ensure the error tolerance in the event of failure of the actuator, an increase in the energy efficiency and a minimization of wear.

10. Method according to one of the preceding claims, **characterized in that** the ascertained wheel forces ($F_{xid}$, $F_{yid}$) are converted by an inverse tyre-force model into setpoint variables for torques, wheel slips, rotational speeds and steering angles of the wheels.

**Revendications**

1. Procédé de commande d'actionneurs agissant sur les roues d'un véhicule automobile (1), le procédé comprenant les étapes suivantes :

- déterminer une force ($F_{xd}$, $F_{yd}$, $M_{zd}$) à exercer sur un point de référence du véhicule automobile sur la base de données spécifiées par le conducteur ($a_{xd}$, $\delta_{fd}$),
- déterminer des forces à exercer sur les roues du véhicule ($F_{xid}$, $F_{yid}$) afin de mettre en œuvre la force ($F_{xd}$, $F_{yd}$, $M_{zd}$) à exercer sur le point de référence du véhicule automobile au moyen d'une première allocation dynamique par une commande prédictive basée sur un modèle (MPC),
- déterminer des valeurs de consigne pour les paramètres de roue ($T_{mjd}$, $T_{bjd}$) à partir des forces de roue déterminées ($F_{xid}$, $F_{yid}$), et
- commander les actionneurs du véhicule automobile afin de mettre en œuvre les valeurs de consigne des paramètres de roue ($T_{mjd}$, $T_{bjd}$),, **caractérisé en ce que**, dans une étape intermédiaire, des grandeurs de mouvement cinématiques de consigne ($v$, $\beta$, $\omega$) sont ajustées au moyen d'un modèle à une voie virtuellement commandé (STM) et sont prises en compte lors de l'allocation dynamique (MPC) des forces exercées sur les roues.

2. Procédé selon l'une des revendications précédentes, **caractérisé en ce que** les instructions du conducteur ($a_{xd}$, $\delta_{fd}$) sont fournies par un conducteur virtuel et/ou un système d'assistance.

3. Procédé selon l'une des revendications précédentes, **caractérisé en ce que** les instructions du conducteur ($a_{xd}$, $\delta_{fd}$) sont une accélération et/ou au moins un angle de braquage.

4. Procédé selon l'une des revendications précédentes, **caractérisé en ce que** les valeurs de consigne pour les paramètres de roue ($T_{mjd}$, $T_{bjd}$) sont des couples respectifs agissant sur les roues, des valeurs de patinage des roues, des vitesses de rotation des roues et/ou des angles de braquage des roues.

**5.** Procédé selon l'une des revendications précédentes, **caractérisé en ce que** le procédé de mise en œuvre d'une valeur de consigne pour un couple agissant sur une roue de véhicule comprend en outre une deuxième allocation dynamique (MPC) qui comprend un contrôle du patinage.

**6.** Procédé selon l'une des revendications précédentes, **caractérisé en ce que** les actionneurs sont des moteurs électriques et/ou des freins à friction.

**7.** Procédé selon l'une des revendications précédentes, **caractérisé en ce que** l'allocation dynamique (MPC) des forces sur les roues ($F_{xid}$, $F_{yid}$) comprend une commande de la dynamique de conduite.

**8.** Procédé selon l'une des revendications précédentes, **caractérisé en ce que** les forces exercées sur les roues ($F_{xid,CA}$, $F_{yd,CA}$) sont déterminées au moyen d'une allocation statique (CA) et sont transmises à l'allocation dynamique (MPC) en tant que valeurs d'entrée, un arbitrage étant notamment effectué à partir des forces exercées sur les roues déterminées par l'allocation statique et l'allocation dynamique.

**9.** Procédé selon l'une des revendications précédentes, **caractérisé en ce que** l'allocation dynamique (MPC) comprend la saturation d'un actionneur associé, une reconfiguration pour garantir la tolérance aux pannes en cas de défaillance de l'actionneur, augmentant l'efficacité énergétique et minimisant l'usure.

**10.** Procédé selon l'une des revendications précédentes, **caractérisé en ce que** les forces déterminées sur les roues ($F_{xid}$, $F_{yid}$), sont converties en valeurs de consigne pour les couples, les patinages de roues, les vitesses de rotation et les angles de braquage des roues au moyen d'un modèle inverse de force des pneus.

**Fig. 1**

**Fig. 2**

**Fahrzeugmodul** — **Chassismodul** — **Eckmodul**

**Fig. 3**

Fig. 4

Fig. 5

Fig. 6

**Fig. 7**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10407035 B1
- DE 102018122948 A1
- DE 102009049635 A1